# DEMANDE DE BREVET EUROPEEN

(11) **EP 4 071 380 A1**
(43) Date de publication de la demande: **12.10.2022**
(21) Numéro de dépôt: 22165691.1
(22) Date de dépôt: 30.03.2022
(51) Int. Cl.: F16F 15/131

(54) **VOLANT D'INERTIE POUR SYSTÈME AMORTISSEUR ET PROCÉDÉ DE FABRICATION D'UN TEL VOLANT D'INERTIE**

(30) Priorité: 01.04.2021 FR 2103412
(71) Demandeur: VALEO EMBRAYAGES, 80009 Amiens (FR)
(72) Inventeur: CALANDRI, Fabrizio, 12084 MONDOVI (IT); RAGURAM, Thulashi Raman, CHENNAI (IN); VENKATARAMA, Naveenkumar, CHENNAI (IN); SAVASTANO, Nicola, 12084 MONDOVI (IT); LAPORTE, Benjamin, 12084 MONDOVI (FR); CIMA, Massimo, 12084 MONDOVI (IT); SUBRAMANIYAN, Vignesh, CHENNAI (IN); NARASIMHAN, Sriram, CHENNAI (IN)
(74) Mandataire: Valeo Powertrain Systems

(57) **Abrégé**

L'invention revendique un volant d'inertie (3) d'axe (X) de révolution, pour un système amortisseur, comprenant :
- un premier élément rotatif (10) destiné à être lié à un arbre menant, comprenant une jupe cylindrique (15),
- un deuxième élément rotatif (20) en contact sur un appui primaire (C1) de la jupe cylindrique (15), le deuxième élément rotatif comprenant un flasque (25) comprenant :
- une cible (60) formée d'une couronne annulaire (600) d'orientation axiale, issue de matière avec le flasque (25) et destinée à être disposée en regard d'un capteur apte à délivrer un signal représentatif de la position angulaire et/ou de la vitesse de la cible,
- un bord additionnel (70) incurvé, issu de matière avec le flasque (25) et disposé au moins en partie radialement entre la cible (60) et la jupe cylindrique (15), de manière à protéger la cible (60) contre les impacts.

## Description

L'invention se rapporte au domaine des chaînes de transmissions pour engin de mobilité, ce dernier étant par exemple un poids lourd, un véhicule agricole, un véhicule de transport en commun ou même un véhicule hybride.

L'invention concerne un volant d'inertie d'un système amortisseur, équipé d'une cible destinée à être disposée en regard d'un capteur. L'invention concerne en particulier un système amortisseur tel un double volant amortisseur, apte à filtrer les acyclismes du moteur de l'engin de mobilité, ainsi qu'un procédé de fabrication d'un tel volant d'inertie.

Il est connu d'équiper les chaines de transmission d'un double volant amortisseur, comportant un volant primaire et un volant secondaire, coaxiaux et mobiles l'un par rapport à l'autre, pour filtrer les vibrations dues aux acyclismes en amont de la boîte de vitesses. Le document DE102011102001 divulgue un tel double volant amortisseur, dont le volant primaire est équipé d'une cible. La cible comporte en particulier un flasque d'orientation radiale et une pluralité de doigts, qui s'étendent depuis la périphérie externe du flasque autour d'une jupe cylindrique du volant primaire.

La cible est généralement une pièce rapportée, dont le flasque est fixé contre le volant primaire et dont les doigts, réalisés par une déformation plastique, sont rigidifiés pour tenir en parallèle le long de l'axe de rotation.

Lorsque le double volant amortisseur est entraîné en rotation, les doigts de la cible génèrent des variations de champ magnétique susceptibles d'être détectées par un capteur disposé en regard de la cible. Un tel capteur est apte à délivrer un signal représentatif de la position angulaire et/ou de la vitesse de la cible.

Toutefois, les risques de déformations futures non désirées restent importants sur ces doigts, dû au rapprochement, et aux impacts de pièces avoisinantes contre la cible, ainsi qu'à la ductilité du matériau employé pour générer la détection. Les doigts de la cible peuvent se tordre radialement vers l'intérieur ou l'extérieur. S'en résultent une dégradation inacceptable de la cible et une imprécision du signal délivré par le capteur.

Il est connu d'ajouter une pièce supplémentaire, tel un anneau de protection entourant le flasque. Mais sa géométrie est complexe et encombrante. L'anneau de protection alourdit le poids du double volant amortisseur. Ses opérations de fabrication et de montage sont couteuses et complexes. De plus, les doigts sont finalisés sous formes de reliefs et d'arêtes vives, mais qui peuvent blesser l'opérateur. Se posent dès lors des problèmes de sécurité et de manipulation sur la chaine de montage. Par ailleurs, le flasque est endommagé en d'autres endroits non entourés, par exemple sur ses extrémités axiales. Cette solution ne garantit donc pas une protection de l'intégralité des doigts de la cible.

L'invention a ainsi pour but d'apporter une solution simple, efficace et économique à ce problème.

Dans ce but, l'invention propose, selon un premier aspect, un volant d'inertie d'axe X de révolution, pour un système amortisseur, comprenant :
- un premier élément rotatif destiné à être lié à un arbre menant, comprenant une jupe cylindrique,
- un deuxième élément rotatif en contact sur un appui primaire de la jupe cylindrique, le deuxième élément rotatif comprenant un flasque d'orientation axiale comprenant :
   - une cible, formée d'une couronne annulaire issue de matière avec le flasque, destinée à être disposée en regard d'un capteur apte à délivrer un signal représentatif de la position angulaire et/ou de la vitesse de la cible,
   - un bord additionnel incurvé issu de matière avec la cible, le bord additionnel incurvé étant au moins en partie disposé radialement entre la cible et la jupe cylindrique, de manière à protéger la cible contre les impacts.

On réalise ici un volant d'inertie protégeant de manière simplifiée la cible, et en particulier sa couronne du flasque, contre les impacts, chocs et vibrations des pièces avoisinantes s'y exerçant. La cible est espacée de la jupe cylindrique, par l'intermédiaire du bord additionnel incurvé intercalé radialement entre ces dernières. Son profil additionnel incurvé est agencé pour absorber en premier les impacts axiaux et latéraux des pièces avoisinantes.

On concentre les impacts contre le flasque au niveau du bord additionnel incurvé, plutôt qu'à la place de la cible. Les efforts de déformation sont localisés aux abords du flasque, plutôt que sur la longueur formant la couronne de la cible. Lors de l'entrechoc des pièces, le bord additionnel incurvé amortit et concentre les impacts, par exemple en exerçant un effort d'arrêt avec la jupe cylindrique. Ceci ne déforme aucunement la couronne annulaire de la cible. Sa forme géométrique est préservée et s'étend conformément le long de l'axe X, notamment selon un premier cercle d'implantation. Les risques de déformations étant limités pour la cible, la précision du signal est préservée.

Lors de sa manipulation, tout risque de blessure est évité pour l'opérateur, le bord additionnel incurvé étant disposé radialement à l'intérieur de la cible, autrement dit entre la jupe cylindrique et la cible. La cible et le bord étant monoblocs, réalisés au sein du flasque, on réduit également le nombre de pièces assurant la protection de la cible. Les coûts de matière et de fabrication d'un tel volant d'inertie sont aussi limités. Le montage est simplifié.

Ce premier aspect de l'invention, peut présenter l'une ou l'autre des caractéristiques décrites ci-dessous, combinées entre elles ou prises indépendamment les unes des autres :
- Le premier élément rotatif et la jupe cylindrique peuvent présenter une épaisseur sensiblement constante, ce qui réduit leur masse. En outre, le deuxième élément rotatif et le flasque peuvent présenter une épaisseur sensiblement constante, ce qui réduit leur masse. L'épaisseur du premier élément rotatif, notamment sa jupe cylindrique, peut être supérieure à celle du deuxième élément rotatif, notamment à celle de son flasque ;
- Le volant d'inertie peut être un volant d'inertie primaire d'un système amortisseur, par exemple d'un double volant amortisseur, apte à être connecté à un arbre menant. Ainsi, les premier et deuxième éléments rotatifs constituent le volant primaire ;
- En variante, le volant d'inertie peut être un volant d'inertie secondaire d'un système amortisseur, par exemple d'un double volant amortisseur, apte à être connecté à un arbre mené. Ainsi, les premier et deuxième éléments rotatifs constituent le volant secondaire;
- Le volant d'inertie peut comprendre des organes élastiques logés au moins en partie à l'intérieur du premier élément rotatif. Le deuxième élément rotatif peut former un couvercle, de forme annulaire, agencé sur le premier élément rotatif pour enfermer lesdits organes élastiques ;
- Le bord additionnel incurvé peut s'étendre radialement au moins en partie à l'intérieur de la couronne annulaire, de manière à agir avantageusement comme un élément intercalaire ;
- Alternativement, le bord additionnel incurvé peut s'étendre radialement au moins en partie à l'extérieur de la couronne annulaire, de manière à agir avantageusement comme un bouclier ;
- Le bord additionnel incurvé peut être formé dans le prolongement de la couronne annulaire ;
- Le bord additionnel incurvé peut être incliné par rapport à la couronne annulaire ;
- Le bord additionnel incurvé peut s'étendre sous une forme courbée depuis la couronne annulaire ;
- Le flasque et le bord additionnel incurvé peut être réalisé par une pluralité de déformations successives ;
- Ces déformations peuvent être choisies parmi celles suivantes :
   - par laminage ou par cintrage,
   - par pliage, par emboutissage ou par frappe,
   - par formage à froid ou à chaud,
   - par découpage en particulier par cisaillement ;
- A titre d'exemple, les déformations du bord additionnel peuvent par pliage ou par emboutissage ;
- Autrement dit, le bord additionnel incurvé peut être réalisée par pliages ou par emboutissages successifs. Une flexion multiple est alors possible, afin d'augmenter son inertie. L'emboutissage permet de réaliser des formes complexes, ce qui supprime les étapes d'usinage ;
- Selon un mode de réalisation particulier, le bord additionnel incurvé peut être formé par au moins un repli de matière. L'avantage est de renforcer le bord additionnel incurvé et de limiter davantage toute déformation plastique éventuelle s'y exerçant. Un repli de matière peut être d'extension axiale ou d'extension radiale, ou bien à la fois d'extensions radiale et axiale ;
- Un repli de matière peut s'étendre radialement en deçà de la jupe cylindrique ;
- Un repli de matière peut être contenu au-delà de la jupe cylindrique ;
- Selon un mode de réalisation particulier, le bord additionnel incurvé peut comprendre une série de replis de matière disposés les uns à la suite des autres, autrement dit un empilement de replis de matière disposés dans le sens axial ou radial. Ces replis de matière peuvent être espacés radialement ou axialement les uns des autres, notamment par un jeu fonctionnel JA' ou JR' entre eux. Ce jeu fonctionnel JA' ou JR' est inférieur à une distance axiale ou radiale susceptible d'entraîner une déformation plastique dudit bord additionnel incurvé ;
- Un tel repli de matière peut être réalisé par cintrage ou pliages multiples. Un repli de matière peut s'étendre radialement selon un plan de cintrage traversant l'axe X, qui est perpendiculaire ou incliné par rapport à l'axe X ;
- Un tel repli de matière peut être réalisé notamment par pliage à plat du bord additionnel incurvé ;
- Un repli de matière peut être réalisé au moins en partie à l'intérieur de la couronne annulaire de la cible ;
- Un repli de matière peut être réalisé au moins en partie à l'extérieur de la couronne annulaire ;
- Dans tous ces cas, la forme de ce repli de matière peut varier et être plus ou moins incurvée, notamment avec possibilité de plusieurs pliages successifs, en fonction des besoins, forme et positions éventuelles de la cible ;
- Un repli de matière peut comprendre au moins un perçage central, de préférence une série de perçages centraux, destiné(s) au passage d'outils de montage des premier et deuxième éléments rotatifs ;
- Un perçage central peut présenter un axe parallèle à l'axe X, de préférence disposé en regard de l'appui primaire ;
- Les perçages centraux de replis de matière peuvent être alignés radialement, selon un même axe de montage;
- Les perçages centraux peuvent être disposés en regard de la jupe cylindrique ;
- Un repli de matière peut être réalisé sous forme de coude, ayant de préférence un angle supérieur ou égal à 90 degrés. L'extrémité libre d'un repli de matière peut former un crochet, d'extension axiale ou radiale, s'étendant notamment en direction de l'axe X ou en direction de la couronne annulaire de la cible ;
- Un repli de matière peut être réalisé sous forme de boucle ou d'ourlet de matière, notamment un angle strictement inférieur à 90 degrés, de préférence s'étendre selon un plan de cintrage parallèle ou incliné par rapport à l'axe X.
- La boucle ou l'ourlet de matière peut être de type ouverte ou de type fermé. L'extrémité d'une telle boucle ou ourlet de matière peut former une courbure de matière, autrement dit une forme courbée d'extension radiale ;
- Cette courbure de matière peut être réalisée sous forme de goutte ou forme à plat ;
- Un repli de matière peut être réalisé sous forme de cône, ayant de préférence un angle supérieur ou égal à 100 degrés, de préférence à 120 degrés, afin que le bord additionnel incurvé n'interfère pas avec la couronne annulaire ;
- Un repli de matière peut être monté à plat le long du deuxième élément rotatif ;
- La couronne annulaire peut s'étendre selon un premier cercle F d'implantation, de centre l'axe X ;
- Le bord additionnel incurvé peut s'étendre au moins en partie radialement à l'intérieur du premier cercle d'implantation. Le bord additionnel incurvé peut s'étendre radialement à l'intérieur dudit premier cercle d'implantation ;
- Ce premier cercle d'implantation peut être localisé sur la périphérie externe du deuxième élément rotatif ;
- La jupe cylindrique du premier élément rotatif peut s'étendre selon un deuxième cercle d'implantation J de centre l'axe X. Le deuxième cercle d'implantation J peut être localisé à l'intérieur dudit premier cercle F d'implantation ;
- Le bord additionnel incurvé peut s'étendre au moins en partie radialement à l'intérieur du deuxième cercle J d'implantation. Le bord additionnel incurvé peut s'étendre radialement à l'extérieur du deuxième cercle d'implantation ;
- Une portion radiale du deuxième élément rotatif peut former un fond destiné à être reçu sur l'appui primaire du premier élément rotatif. Par ailleurs, le flasque s'étend depuis la périphérie radialement externe de la portion radiale ;
- Selon un mode de réalisation, le bord additionnel incurvé peut être configuré de telle manière à amortir, par contact du bord additionnel incurvé sur un appui secondaire de la jupe cylindrique, les impacts contre la cible;
- Selon un autre mode de réalisation, le bord additionnel incurvé peut être configuré de telle manière à amortir, par contact du bord additionnel incurvé sur un appui secondaire du deuxième élément rotatif, les impacts contre la cible;
- En particulier, l'appui secondaire peut être distinct axialement de l'appui primaire de la jupe cylindrique;
- Les appuis primaire et secondaire de la jupe cylindrique peuvent être axialement espacés l'un de l'autre ;
- L'appui secondaire de la jupe cylindrique peut être décalé axialement de l'appui primaire de la jupe cylindrique ;
- A titre d'exemple, les appuis primaire et secondaire de la jupe cylindrique peuvent être axialement opposés ;
- L'appui primaire de la jupe cylindrique peut être formé en bout de la jupe cylindrique ;
- L'appui secondaire de la jupe cylindrique peut être formé axialement au centre de la jupe cylindrique. On entend par « centre » une zone située équidistant entre les deux extrémités axiales de la jupe cylindrique.
- L'appui secondaire de la jupe cylindrique peut correspondre à une zone s'étendant sur environ 5 à 20% la longueur séparant les deux extrémités axiales de la jupe cylindrique. En variante, cette zone peut s'étendre sur environ 25 à 35% la longueur séparant les deux extrémités axiales de la jupe cylindrique. Ces situations dépendent des formes de l'appui secondaire et du bord additionnel incurvé s'y appliquant ;
- L'appui primaire peut être décalé axialement de la couronne annulaire ;
- L'appui primaire peut être disposé radialement en deçà du flasque du deuxième élément rotatif;
- De préférence, l'appui secondaire peut être décalé de la couronne annulaire ;
- L'appui secondaire de la jupe cylindrique peut être décalé axialement de la couronne annulaire ;
- L'appui secondaire de la jupe cylindrique peut être décalé radialement de la couronne annulaire ;
- L'appui secondaire du deuxième élément rotatif peut être contenu à l'intérieur de la couronne annulaire ;
- L'appui secondaire peut être disposé radialement en deçà de la couronne annulaire ;
- Le bord additionnel incurvé peut former avec le flasque un angle δ1 d'inclinaison du bord additionnel dit angle primaire. Le flasque peut former avec la portion radiale du deuxième élément rotatif un autre angle d'inclinaison du flasque dit angle secondaire ou tertiaire.

En particulier, il peut s'agir du fond du deuxième élément ou du côté opposé audit fond du deuxième élément. Ledit angle d'inclinaison du flasque peut être supérieur ou égal à l'angle d'inclinaison du bord additionnel incurvé. L'avantage est notamment de limiter les risques de fléchissement ou autre déformation lors du montage par l'opérateur ;
- Le premier élément rotatif peut comprendre un épaulement formant au moins en partie l'appui secondaire de la jupe annulaire. Alternativement, le deuxième élément rotatif peut comprendre un épaulement formant au moins en partie l'appui secondaire ;
- L'épaulement peut s'étendre de manière continue autour de l'axe X, de préférence sur 360 degrés ;
- L'épaulement peut s'étendre de manière discontinue autour de l'axe X, formant une pluralité d'excroissances ;
- L'appui secondaire, en particulier son épaulement, peut être réalisé depuis le diamètre extérieur de la jupe cylindrique du premier élément rotatif. Notamment, il peut être formé par un retrait de matière ;
- L'appui secondaire, en particulier son épaulement, peut être réalisé par usinage ou forgeage de la jupe cylindrique ;
- A titre d'exemple, l'appui secondaire, en particulier son épaulement, peut être formé par une nervure annulaire ;
- En variante, l'appui secondaire, en particulier son épaulement, peut être formé par une rainure annulaire ;
- Alternativement, l'appui secondaire de la jupe cylindrique peut être défini axialement tout le long de la jupe cylindrique. La jupe est ici exempte d'épaulement, de nervure ou de forme additionnel de protection. L'avantage est de réaliser une jupe cylindrique de faible épaisseur. On réduit son poids et on augmente son inertie ;
- Le bord additionnel incurvé du flasque et l'appui secondaire de la jupe cylindrique peuvent être liés ensemble au moyen d'une soudure, notamment au niveau de l'extrémité du bord additionnel incurvé. Dans un cas particulier, le bord additionnel incurvé et l'épaulement peuvent être liés ensemble au moyen d'une soudure. L'avantage est d'améliorer la résistance et de garantir une position optimisée des pièces. On limite les chocs engendrés entre elles ;
- De préférence, la soudure peut être réalisée en bout du bord additionnel incurvé, autrement dit sur son extrémité radialement interne, par exemple le long de la tranche du bord additionnel incurvé ;
- A titre d'exemple, la soudure peut s'étendre en direction de l'axe X. L'avantage est de retenir davantage le positionnement radial du bord additionnel incurvé avec la jupe cylindrique ;
- A titre d'exemple, la soudure peut s'étendre le long de l'axe X. L'avantage est de retenir davantage le positionnement axial du bord additionnel incurvé avec la jupe cylindrique, notamment avec son épaulement ;
- Avantageusement, le bord additionnel incurvé peut s'étendre au droit de de la jupe cylindrique. La jupe peut alors recevoir la tranche du bord additionnel incurvé, par exemple au niveau de son appui secondaire. L'avantage est ici de localiser leur contact éventuellement tout en écartant au maximum la cible de la jupe cylindrique. Par exemple, l'appui secondaire de la jupe cylindrique peut recevoir la tranche de l'épaisseur du bord additionnel incurvé ;
- Alternativement, le bord additionnel incurvé peut s'étendre le long de la jupe cylindrique du premier élément rotatif. En particulier, le bord additionnel incurvé peut s'étendre le long de de la cible, par exemple sous la forme d'un repli de matière. L'avantage est ici d'augmenter la zone de contact possible entre les pièces. Le bord additionnel incurvé peut être ainsi entouré par la couronne annulaire, pour la protéger contre la jupe cylindrique ;
- Le bord additionnel incurvé peut comprendre au moins deux zones de contact distinctes ;
- Au moins l'une des zones de contact est réalisée par exemple par un repli de matière ;
- Au moins l'une des zones de contact est réalisée par une forme en U ou en J du bord additionnel incurvé ;
- Le bord additionnel incurvé peut comprendre au moins une zone de contact de forme plane ou de forme bombé.
- Notamment, le bord additionnel incurvé peut comprendre une zone de contact s'étendant radialement, destinée à venir en appui axial sur la jupe cylindrique, par exemple sur l'appui secondaire, en particulier sur ledit épaulement ;
- Notamment, le bord additionnel incurvé peut comprendre une zone de contact s'étendant axialement, destinée à centrer le flasque sur la jupe cylindrique, par exemple sur l'appui secondaire, en particulier sur ledit épaulement ;
- De manière avantageuse, le bord additionnel incurvé, notamment le repli de matière, peut présenter en section transversale une forme de U, de J, de V ou de C, ayant par exemple une zone de contact de type bombée ;
- Alternativement, le bord additionnel incurvé, notamment le repli de matière, peut présenter en section transversale une forme de S ou de Z, pour réaliser le bord additionnel incurvé par plusieurs pliages les uns sur les autres ;
- Dans un cas particulier, le bord additionnel incurvé, et notamment le repli de matière, peut présenter une forme en U ou en J en section transversale ;
- L'une des branches du U ou du J, dite branche libre, peut alors être située au plus près de la jupe cylindrique ;
- En variante, l'une des branches du U ou du J, dite branche libre, peut être située au plus loin de l'axe X.
- La forme du U peut alors être renversée, la base du U ou du J étant située au plus près de la jupe cylindrique ;
- Alternativement, le bord additionnel incurvé peut présenter une forme en L ;
- La base de la forme en L du bord additionnel incurvé peut être située au plus près de l'axe X ;
- Selon un mode particulier, le bord additionnel incurvé peut être embouti et emmanché en force par interférence dans la matière dudit épaulement. Aucun jeu fonction n'est alors possible ;
- Selon un mode particulier, le bord additionnel incurvé du flasque peut être configuré initialement de telle manière à être en appui axial sur l'appui secondaire de la jupe cylindrique, en particulier sur un épaulement de la jupe cylindrique. La zone d'appui du bord additionnel incurvé, notamment sa tranche, est ici directement en contact avec le premier élément rotatif, de par leur mise en appui respectivement l'un sur l'autre;
- Alternativement, le bord additionnel incurvé du flasque peut être configuré initialement de telle manière à être espacé radialement de l'appui secondaire de la jupe cylindrique, en particulier espacé d'un épaulement de la jupe cylindrique, par un jeu fonctionnel JR. Ce jeu fonctionnel est inférieur à une distance radiale susceptible d'entraîner une déformation plastique dudit bord additionnel incurvé ;
- Alternativement ou en complément, le bord additionnel incurvé du flasque peut être configuré initialement de telle manière à être espacé axialement de l'appui secondaire de la jupe cylindrique, en particulier espacé d'un épaulement de la jupe cylindrique, par un jeu fonctionnel JA. Ce jeu fonctionnel est inférieur à une distance axiale susceptible d'entraîner une déformation plastique dudit bord additionnel incurvé;
- Selon un autre mode particulier, le bord additionnel incurvé du flasque peut être configuré initialement de telle manière à être en appui axial ou radial sur l'appui secondaire, en particulier sur un épaulement ou une portion radiale du deuxième élément rotatif. La zone d'appui du bord additionnel incurvé, notamment sa tranche, peut être directement en contact avec le deuxième élément rotatif, de par leur mise en appui respectivement l'un sur l'autre;
- Alternativement, le bord additionnel incurvé du flasque peut être configuré initialement de telle manière à être espacé radialement de l'appui secondaire du deuxième élément rotatif, en particulier espacé d'un épaulement ou d'une portion radiale du deuxième élément rotatif, par un jeu fonctionnel JR'. Ce jeu fonctionnel est inférieur à une distance radiale susceptible d'entraîner une déformation plastique dudit bord additionnel incurvé ;
- Alternativement ou en complément, le bord additionnel incurvé du flasque peut être configuré initialement de telle manière à être espacé axialement de l'appui secondaire du deuxième élément rotatif, en particulier espacé d'un épaulement ou d'une portion radiale du deuxième élément rotatif, par un jeu fonctionnel JA'. Ce jeu fonctionnel est inférieur à une distance axiale susceptible d'entraîner une déformation plastique dudit bord additionnel incurvé;
- Un jeu fonctionnel JA, JA', JR, JR' peut être compris entre 0,1 mm et 3mm, de préférence entre 0,5 mm et 2,5 mm.
- Un jeu fonctionnel JA, JA', JR, JR' peut être inférieur à 2 mm, de préférence inférieur à 1 mm ;
- La couronne annulaire de la cible peut comprendre une pluralité de fenêtres, réparties autour de l'axe X ;
- Les fenêtres de la couronne annulaire peuvent se prolonger axialement jusqu'au niveau de l'appui primaire. Ceci augmente la zone de lecture de la cible ;
- L'une des fenêtres peut présenter une dimension circonférentielle différente de celles des autres fenêtres de manière à constituer un repère, tel qu'un repère de point mort haut par exemple ;
- A titre d'exemple, les fenêtres peuvent être séparées les unes des autres par des bras, notamment une série de bras. Lesdits bras peuvent s'étendre parallèlement à l'axe X ;
- Le bord additionnel incurvé peut s'étendre depuis lesdits bras. Le bord additionnel incurvé peut s'étendre de manière continue autour de l'axe X, de préférence tout autour de l'axe X, sur 360 degrés. On augmente la résistance et la rigidité des pièces. Grâce audit bord additionnel incurvé continue, les fenêtres sont ici délimitées par un contour de type fermé. Les fenêtres présentent l'avantage d'être liées de manière rigide par le bord additionnel incurvé ;
- A titre d'exemple, les fenêtres peuvent être séparées les unes des autres par des doigts, notamment une série de doigts. Lesdits doigts peuvent s'étendre parallèlement à l'axe X ;
- Le bord additionnel incurvé peut s'étendre depuis l'extrémité des doigts.
- Le bord additionnel incurvé peut s'étendre de manière discontinue, de préférence sous forme de portions discontinues réparties autour de l'axe X, tels des doigts. On augmente ici leur flexibilité et le jeu entre pièces. Grâce audit bord additionnel incurvé discontinue, les fenêtres sont ici délimitées par un contour de type ouvert. Une meilleure déformation réversible et flexibilité des doigts des fenêtres est possible, pour le bord additionnel incurvé puisse venir en contact sur l'appui secondaire de la jupe ;
- Au moins l'un des doigts peut comprendre au moins une encoche, réalisée sur la couronne annulaire de la cible ;
- L'au moins une encoche est réalisée aux abords du bord additionnel incurvé. La déformation, ici primaire, du flasque est simplifiée, pour mettre en forme un bord additionnel incurvé distinct de la couronne annulaire ;
- Un même doigt peut comprendre deux encoches :
   - l'une étant réalisée aux abords du bord additionnel incurvé ; et
   - l'autre étant disposée aux abords du fond du deuxième élément rotatif
- Ladite encoche d'un doigt peut être réalisée au droit du flasque, plus précisément au droit de la couronne annulaire ;
   - De préférence, ladite encoche d'un doigt peut déboucher radialement sur l'intérieur ;
   - Alternativement, ledit encoche d'un doigt peut déboucher radialement sur l'extérieur ;
   - Ladite encoche, notamment sa profondeur, peut être réalisée entre 1/3 et 2/3 de l'épaisseur dudit doigt ; Cet intervalle de valeurs définit la marge de sécurité de l'encoche au-delà duquel il y a un risque de détérioration ou de rupture du bord additionnel incurvé lors de sa mise en forme.
   - Au moins l'un des doigts peut comprend un trou ou perçage central, réalisé sur la couronne annulaire de la cible. Ce trou ou perçage central peut être réalisé au droit du flasque, notamment au droit du doigt et de la couronne annulaire. Le trou ou perçage central du doigt peut être réalisé aux abords du bord additionnel incurvé. On simplifie la déformation du flasque, ici sa déformation secondaire, pour mettre en forme finale le bord additionnel incurvé ;
   - Un tel perçage central, notamment sa profondeur, peut être réalisé entre 1/3 et 2/3 de l'épaisseur dudit doigt. Cet intervalle de valeurs définit la marge de sécurité du perçage central au-delà duquel il y a un risque important de détérioration ou de rupture du bord additionnel incurvé lors de sa mise en forme ;
   - De préférence, ledit perçage central d'un doigt peut déboucher radialement sur l'extérieur ;
   - Alternativement, ledit perçage central d'un doigt peut déboucher radialement sur l'intérieur ;

L'invention propose aussi, selon un deuxième aspect de l'invention, un sous-ensemble comportant un volant d'inertie précité et un capteur destinée à être disposé radialement en regard de la couronne annulaire. Le capteur peut être un capteur apte à détecter des variations de champs magnétiques, tel qu'un capteur à effet hall ou un capteur passif. Le volant d'inertie peut reprendre tout ou partie des caractéristiques mentionnées précédemment.

Ce sous-ensemble peut être par exemple pour détection des variations de champs magnétiques, notamment au sein d'un système amortisseur.

L'invention propose aussi selon un troisième aspect, un système amortisseur pour chaine de transmission d'un engin de mobilité, destiné à être couplé par exemple à un moteur à combustion, et comprenant en outre :
- un volant d'inertie primaire, apte à coopérer avec un arbre mené,
- un volant d'inertie secondaire, destiné à être entrainé en rotation par un arbre menant,
- des organes élastiques, couplant élastiquement en rotation lesdits volants d'inertie primaire et secondaire, et dans lequel le volant d'inertie primaire ou le volant d'inertie secondaire est un volant d'inertie pouvant reprendre tout ou partie des caractéristiques mentionnées précédemment.

L'avantage, selon le deuxième aspect, est d'amortir les acyclismes et vibrations des volants d'inertie, notamment les impacts résultants contre la cible, en fonction de l'évolution des vitesses de rotation du moteur. Selon cet aspect, le deuxième élément rotatif, ici le couvercle, peut être agencé avec le volant d'inertie secondaire pour enfermer des organes élastiques. Notamment, le volant d'inertie secondaire peut comprendre en outre un voile coopérant avec le deuxième élément rotatif par l'intermédiaire d'une ou de plusieurs rondelles d'amortissement élastique. Le voile est ici adapté pour supporter les organes élastiques.

Selon cet aspect, le deuxième élément rotatif peut comprendre une extrémité libre, ici sur sa périphérie radialement interne, sur laquelle sont montés la ou les rondelles d'amortissement élastique.

Selon cet aspect, le système amortisseur peut être un double volant amortisseur.

L'invention propose aussi, selon un quatrième aspect de l'invention, un procédé de fabrication d'un volant d'inertie pour système amortisseur, pouvant reprendre tout ou partie des caractéristiques mentionnées précédemment, comprenant au moins les étapes suivantes :
a) Fourniture d'un premier et d'un deuxième éléments rotatifs ;
b) Retrait de matière dans le deuxième élément rotatif, pour former une couronne annulaire, d'axe X de révolution ;
c) Déformation primaire du deuxième élément rotatif, notamment sous forme d'un repli de matière, pour former un bord additionnel incurvé ;
d) Déformation secondaire du deuxième élément rotatif, pour former:
   - un fond ; et
   - un flasque sur lequel sont formés la couronne annulaire et le bord additionnel incurvé;
e) Mise en appui primaire du fond du deuxième élément rotatif sur le premier élément rotatif ;
f) Déformation tertiaire par enfoncement du flasque vers l'axe X de révolution, de telle sorte que :
   - la couronne annulaire puisse définir une zone de lecture dit cible pour capteur ; et
   - le bord additionnel incurvé soit disposé au moins en partie radialement entre la couronne annulaire et le premier élément rotatif.

Grâce à ce procédé de fabrication, on réalise un volant d'inertie dont la forme du flasque est réalisée par plusieurs déformations, et qui protège la cible et sa couronne contre les impacts axiaux et latéraux qui s'y exerceraient.

Par une succession de déformations du premier élément rotatif, on réalise une forme finale de flasque, dont la forme géométrique de la couronne annulaire est préservée, et dont les chocs sont localisés sur le bord additionnel incurvé. La cible et le bord additionnel incurvé sont monoblocs, réalisés au sein du flasque. On réduit les étape et pièces de montage assurant la protection de la cible. Les coûts de matière et de fabrication d'un tel volant d'inertie sont aussi limités. Le montage est simplifié. La forme finale de la cible peut être définie dès la déformation primaire, tandis que sa disposition finale entre la cible et le premier élément rotatif est réalisé lors de la déformation tertiaire.

Par ailleurs, la forme finale de la cible définie est définie à la fin du procédé, c'est-à-dire lors de la déformation tertiaire du flasque, pour la préserver et préserver la précision de son signal.

Ce quatrième aspect de l'invention, peut présenter l'une ou l'autre des caractéristiques décrites ci-dessous, combinées entre elles ou prises indépendamment les unes des autres :
- Le premier élément rotatif peut être une tôle métallique, réalisée d'un seule tenant ;
- Le deuxième élément rotatif peut être une tôle métallique, réalisée d'un seule tenant ;
- La tôle métallique est de préférence une tôle en acier, tel que de l'acier DD15 par exemple ;
- L'étape de retrait de matière peut être réalisé par poinçonnage ou par découpage, pour délimiter la couronne annulaire. De manière additionnel, on peut réaliser lors du retrait de matière des encoches et/ou des perçages sur la couronne annulaire, en particulier sur au moins un des bras ou des doigts de la couronne annulaire. De tels retraits additionnels facilitent le rabat de la couronne annulaire, notamment pour l'outillage de formage ;
- L'étape de déformation primaire peut être réalisée par cintrage, ou par frappe, ou par formage à froid ou à chaud, ou encore par découpage notamment par cisaillement du deuxième élément rotatif. Dans tous ces cas, cette déformation primaire doit permettre de réaliser le bord additionnel incurvé incliné sous une forme inclinée ou courbée ;
- La déformation primaire peut être localisée radialement sur l'extrémité externe du deuxième élément rotatif;
- Lors de l'étape de déformation primaire, le bord additionnel incurvé peut former avec le flasque un angle d'inclinaison du bord additionnel incurvé, dit angle primaire. En d'autres termes, le bord additionnel incurvé peut être incliné par rapport à la couronne annulaire selon un angle d'inclinaison primaire ;
- L'angle d'inclinaison primaire peut être inférieur à 120 degrés, de préférence inférieur ou égal à 90 degrés ;
- A titre d'exemple, la déformation primaire peut être réalisée par pliage à plat, notamment en pliant le bord additionnel incurvé sur lui-même. Dans une telle situation, l'angle d'inclinaison primaire est sensiblement nul, c'est-à-dire égal ou proche de 0 degré. On réalise lors de la déformation primaire, un repli de matière sur lui-même;
- Ce repli de matière permet de réaliser un bord additionnel incurvé s'étendant radialement à l'intérieur de la couronne annulaire, plus précisément le long de la couronne annulaire ;
- L'étape de déformation secondaire peut être réalisée par pliage ou emboutissage du deuxième élément rotatif ;
- Lors de l'étape de déformation secondaire, le flasque peut former avec le fond du deuxième élément rotatif un angle d'inclinaison du flasque, dit angle secondaire. En d'autres termes, le flasque peut être incliné par rapport audit fond, selon un angle d'inclinaison secondaire ;
- L'angle d'inclinaison secondaire peut être supérieur à égal à 90 degrés. En d'autres termes, l'angle d'inclinaison secondaire peut être supérieur ou égale à l'angle d'inclinaison primaire ;
- A titre d'exemples, l'angle d'inclinaison secondaire réalisée lors de la déformation secondaire, peut être un angle obtus. On entend par angle « obtus », une valeur d'angle strictement supérieur à 90 degrés ;
- La déformation secondaire peut être définie selon un premier cercle d'implantation, notamment défini par le rayon de courbure issu de de la déformation secondaire;
- Ce premier cercle d'implantation, de centre l'axe X, peut être formé sur le deuxième élément rotatif ;
- Ce premier cercle d'implantation peut être disposé sur l'extrémité radialement externe du deuxième élément ;
- Ce premier cercle d'implantation peut définir la position finalisée de la couronne annulaire de la cible ;
- En d'autres termes, le premier cercle d'implantation peut définir ladite zone de lecture de la cible ;
- Lors de l'étape de mise en appui des deux éléments rotatifs, la jupe cylindrique peut être disposée l'intérieur du premier cercle d'implantation issu de la déformation secondaire ;
- La mise en appui du fond sur la jupe cylindrique peut être définie selon un deuxième cercle d'implantation ;
- Le diamètre extérieur de jupe cylindrique peut être strictement inférieur à celui du premier cercle d'implantation ;
- La jupe cylindrique peut être écartée du premier cercle d'implantation, selon un écartement radial. ;
- L'étape de déformation tertiaire peut être réalisée par formage à froid, notamment par roulage ou par laminage, ou par cintrage ou encore par pliage. La déformation tertiaire doit permettre de rabattre le flasque vers l'axe X de révolution. Le flasque peut ainsi être rabattu par enfoncement vers l'axe X, au moyen d'un outillage de formage ;
- Le flasque, ici sa couronne annulaire, peut être rapproché de l'axe X et donc du premier élément rotatif ;
- Lors de l'étape de déformation tertiaire, le flasque peut former avec le fond du deuxième élément rotatif un autre angle d'inclinaison du flasque, dit angle tertiaire ;
- Le flasque peut être incliné par rapport audit fond, selon un angle d'inclinaison tertiaire. L'angle d'inclinaison tertiaire est ici strictement inférieur à l'angle d'inclinaison secondaire ;
- L'angle d'inclinaison tertiaire peut être supérieur à égal à 90 degrés ;
- L'angle d'inclinaison tertiaire peut être supérieur ou égale à l'angle d'inclinaison primaire. L'angle de l'angle d'inclinaison tertiaire peut être compris entre les angles d'inclinaison primaire et secondaire ;
- La déformation tertiaire peut être localisée aux abords de la déformation primaire, plus précisément au niveau du rayon de courbure issu de de la déformation primaire ;
- La déformation tertiaire peut être localisée sur la couronne annulaire et aux abords du bord additionnel incurvé ;
- En d'autres termes, la déformation tertiaire peut être exercer depuis une portion du flasque situé radialement à l'extérieur dudit premier cercle d'implantation. Cette portion du flasque est rabattue, lors de la déformation tertiaire, de sorte à être contenue dans ledit premier cercle d'implantation. Le bord additionnel incurvé est aussi rabattu, lors de la déformation tertiaire, pour être contenu avec le reste du flasque à l'intérieur du premier cercle d'implantation ;
- Le flasque peut être incliné en direction de l'axe X, de préférence selon un angle d'inclinaison tertiaire. De cette manière, la position finale du flasque forme avec le fond un angle tertiaire d'inclinaison ;
- L'angle d'inclinaison tertiaire peut être inférieur à l'angle secondaire d'inclinaison ;
- L'angle d'inclinaison tertiaire réalisée lors de la déformation tertiaire, peut être un angle droit.
- Dans une telle situation, ladite couronne annulaire peut s'étendre parallèlement à l'axe X ;
- Ladite zone de lecture peut alors s'étendre par rapport à l'axe X, autrement dit parallèlement à l'axe X ;
- Lors de la déformation tertiaire, le flasque peut être par exemple rabattu par un outillage en direction de l'axe X de révolution jusqu'à être en contact sur la jupe cylindrique. Notamment, le bord additionnel incurvé est positionné lors de la déformation tertiaire en contact sur la jupe cylindrique, en particulier sur un appui secondaire de la jupe ;
- Lors de la déformation tertiaire, le flasque peut être par exemple rabattu par un outillage en direction de l'axe X de révolution jusqu'à être espacé radialement de la jupe cylindrique par un jeu fonctionnel JR. Notamment, le bord additionnel incurvé est positionné de manière espacé de la jupe cylindrique, en particulier de son appui secondaire ;
- En d'autres termes, l'outillage réalisant la déformation tertiaire peut être arrêté avant que le flasque, notamment le bord additionnel incurvé, vienne en contact sur la jupe cylindrique, lors de la déformation tertiaire ;
- Lors de la déformation tertiaire, le flasque peut être par exemple rabattu par un outillage en direction de l'axe X de révolution jusqu'à être espacé radialement d'un épaulement de la jupe cylindrique par un jeu fonctionnel JA ;
- On entend par « jeu fonctionnel » un espace défini entre la jupe cylindrique et le bord additionnel incurvé ;
- Lors de la déformation tertiaire, le flasque peut être par exemple rabattu par un outillage en direction de l'axe X de révolution, de telle sorte que la tranche de l'épaisseur du flasque soit en regard de la jupe cylindrique. En particulier, de telle sorte que la tranche de l'épaisseur du flasque soit en contact sur la jupe cylindrique ;
- De manière additionnelle lors de la déformation tertiaire, on peut rectifier le bord additionnel incurvé, pour lui donner sa forme finale rabattue, notamment pour qu'il puisse s'étendre :
   - radialement au droit du premier élément rotatif ; ou
   - axialement le long dudit premier élément rotatif ;

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées :
- [Fig. 1] est une perspective du double volant amortisseur, selon un premier mode de réalisation de l'invention ;
- [Fig. 2] est une coupe axiale du double volant amortisseur selon le premier mode de réalisation de la [Fig. 1] ;
- [Fig. 3] est une vue détaillée d'un volant d'inertie selon le premier mode de réalisation de la [Fig. 1] ;
- [Fig. 4] est une vue détaillée du deuxième élément rotatif du volant d'inertie selon le premier mode de la [Fig. 1] ;
- [Fig. 5] est une coupe axiale du deuxième élément rotatif du volant d'inertie selon le premier mode de la [Fig. 1] ;
- [Fig. 6] à [Fig. 10] décrivent un procédé de fabrication du volant d'inertie selon le premier mode de la [Fig. 1] ;
- [Fig. 11] est une vue en coupe axiale du volant d'inertie selon un deuxième mode de réalisation de l'invention ;
- [Fig. 12], [Fig. 13] sont deux vues détaillées alternatives du volant d'inertie selon un troisième mode de réalisation ;
- [Fig. 14] est une vue en perspective du deuxième élément rotatif du volant d'inertie selon un quatrième mode de réalisation ;
- [Fig. 15] est une vue détaillée du deuxième élément rotatif selon le quatrième mode de la [Fig. 14] ;
- [Fig. 16] est une vue détaillée du volant d'inertie selon un cinquième mode de réalisation ;
- [Fig. 17], [Fig. 18] décrivent un procédé de fabrication d'un volant d'inertie selon un sixième mode de réalisation ;
- [Fig. 19], [Fig. 20] décrivent un procédé de fabrication d'un volant d'inertie selon un septième mode de réalisation ;
- [Fig. 21] est une vue détaillée du volant d'inertie selon un huitième mode de réalisation ;
- [Fig. 22] est une vue détaillée du volant d'inertie selon un neuvième mode de réalisation ;
- [Fig. 23] est une vue détaillée du deuxième élément rotatif du volant d'inertie selon un dixième mode de réalisation, comprenant au moins un repli de matière, de forme coudée, formant le bord additionnel incurvé ;
- [Fig. 24] est une vue en perspective du deuxième élément rotatif selon le dixième mode à la [Fig. 14] ;
- [Fig. 25] à [Fig. 34] illustrent des variantes de formes coudées du bord additionnel incurvé du deuxième élément rotatif ;
- [Fig. 35] à [Fig. 36] illustrent d'autres variantes de formes du bord additionnel incurvé du deuxième élément ;
- [Fig. 37] est une vue détaillée du volant d'inertie selon un onzième mode de réalisation ;

Par « engin de mobilité », on entend les véhicules automobiles, comprenant les véhicules passagers, mais aussi les véhicules industriels, notamment les poids lourds, les véhicules de transport en commun ou les véhicules agricoles, ainsi que tout engin de transport permettant de faire passer d'un point à un autre un être vivant et/ou un objet. Ce dernier peut comporter une motorisation hybride, une motorisation électrique et/ou de petite mobilité.

Sauf indication contraire, « axialement » signifie « parallèlement à l'axe X de rotation du volant d'inertie ou du double volant amortisseur » ; « radialement » signifie « selon un axe transversal coupant l'axe de rotation du volant d'inertie ou du double volant amortisseur » ; « angulairement » ou « circonférentiellement » signifient « autour de l'axe X de rotation du volant d'inertie ou du double volant amortisseur ».

Dans la suite de la description et des revendications, on utilisera à titre non limitatif et afin d'en faciliter la compréhension, les termes "intérieur / interne" ou "extérieur / externe" par rapport à l'axe X et suivant une orientation radiale, orthogonale à ladite orientation axiale ; et les termes "arrière" AR et "avant" AV pour définir la position relative d'un élément par rapport à un autre selon la direction axiale, un élément destiné à être placé proche du moteur thermique étant désigné par arrière et un élément destiné à être placé proche de la boîte de vitesses étant désigné par avant. Les épaisseurs E_{P1}, E_{P2}, E_{P3} sont ici mesurées selon l'axe X de rotation.

Dans la présente description, on peut indexer certains éléments, comme par exemple : premier élément rotatif ou deuxième élément rotatif, ou encore volant d'inertie primaire ou volant d'inertie secondaire. Il s'agit d'un simple indexage pour différencier et nommer des éléments proches mais non identiques. Cette indexation n'implique pas une priorité d'un élément par rapport à un autre et on peut aisément inter-changer de telles dénominations sans sortir du cadre de la présente description. Cette indexation n'implique pas non plus un ordre dans le temps.

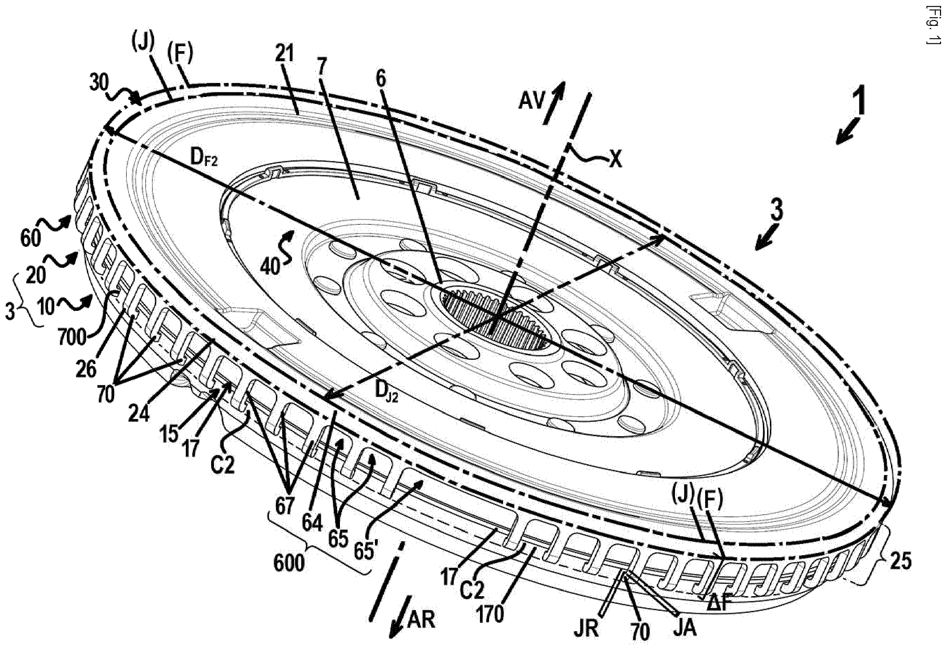

En relation avec les FIGURES 1 à 2, on observe un système 1 amortisseur d'une chaîne de transmission, tel un double volant amortisseur. Celui-ci comprend un volant d'inertie 3, formé de deux pièces distinctes rapportées et en appui axial l'une sur l'autre, ici un premier élément rotatif 10, situé à l'arrière AR, et un deuxième élément rotatif 20, situé à l'arrière AR. Sur la FIGURE 1, le premier élément rotatif 10 est pourvue d'orifices permettant le passage de vis de fixation, non illustrées, pour fixer ledit volant d'inertie 3 sur le vilebrequin du moteur.

En particulier, le système 1 amortisseur comporte un volant d'inertie primaire 30 et un autre volant d'inertie secondaire 40, de formes cylindriques et montés mobiles en rotation l'un par rapport à l'autre autour de l'axe X.

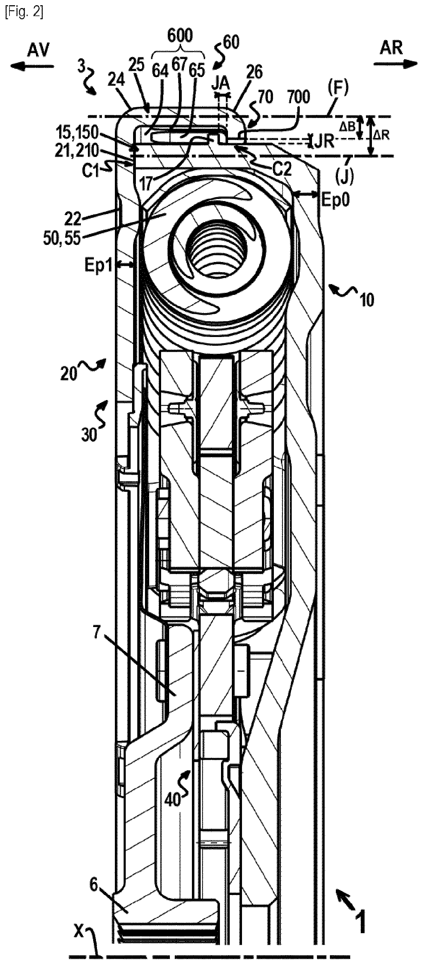

Un tel système 1 amortisseur comporte en outre des organes élastiques 55, illustrés sur la FIGURE 2, qui sont agencés pour transmettre un couple et amortir les acyclismes de rotation entre les volants d'inertie primaire 30 et secondaire 40. Le volant d'inertie primaire 30 est destiné à relié à être un arbre menant, précisément au bout d'un vilebrequin d'un moteur. Le volant d'inertie secondaire 40 est destiné à relié à être un arbre mené, par exemple en formant le plateau de réaction d'un embrayage (non illustré) relié à l'arbre d'entrée d'une boîte de vitesses.

Par ailleurs, le volant d'inertie secondaire 40 peut être centré et guidé sur le volant d'inertie primaire, notamment au moyen d'un palier (non illustré), tel qu'un palier à roulement à billes. Par ailleurs, chaque organe élastique 55 s'étend circonférentiellement entre deux pattes d'appui d'un voile 5 et deux sièges d'appui portés par le volant d'inertie primaire. Le voile 5 est ici solidaire en rotation du volant d'inertie secondaire 40.

Par ailleurs, le volant d'inertie secondaire 40 comporte en outre :
- un moyeu 6, présentant des cannelures internes destinées à coopérer avec des cannelures complémentaires d'un dispositif additionnel de transmission de couple, tel qu'un simple, double ou triple embrayage ou un convertisseur de couple, pour transmettre le couple entre le volant d'inertie secondaire 40 et un arbre d'entrée de la boîte de vitesses ;
- une portion radiale 7 qui s'étend radialement vers l'extérieur depuis le moyeu 6. Ladite portion radiale 7 peut être liée solidairement en rotation au voile 5 par des rivets ou tout autre moyen de fixation possible ;

Ainsi, en fonctionnement, chacun des organes élastiques 55 prend appui, à une première extrémité, contre un siège d'appui porté par le volant d'inertie primaire 30 et, à une seconde extrémité, contre une patte d'appui, non représentée, portée par le voile 5, de sorte à assurer la transmission du couple entre les volants d'inertie 30 primaire et 40 secondaire.

Selon une variante non illustrée, le voile 5 n'est pas directement fixé au volant d'inertie secondaire 40 mais est mobile en rotation autour de l'axe X par rapport au volant d'inertie secondaire 40. Dans ce cas, le couple est transmis entre le voile 5 et le volant d'inertie secondaire 40 par un ou plusieurs étages supplémentaires d'organes élastiques de la deuxième rondelle 20.

En outre, le volant d'inertie secondaire 40 est fixé au moyeu 6 pour augmenter son inertie.

Dans d'autres modes de réalisation non illustrés, le volant d'inertie secondaire 40 présente une surface annulaire plane, tournée vers l'avant AV et destinée à former une surface d'appui pour une garniture de friction d'un disque d'embrayage.

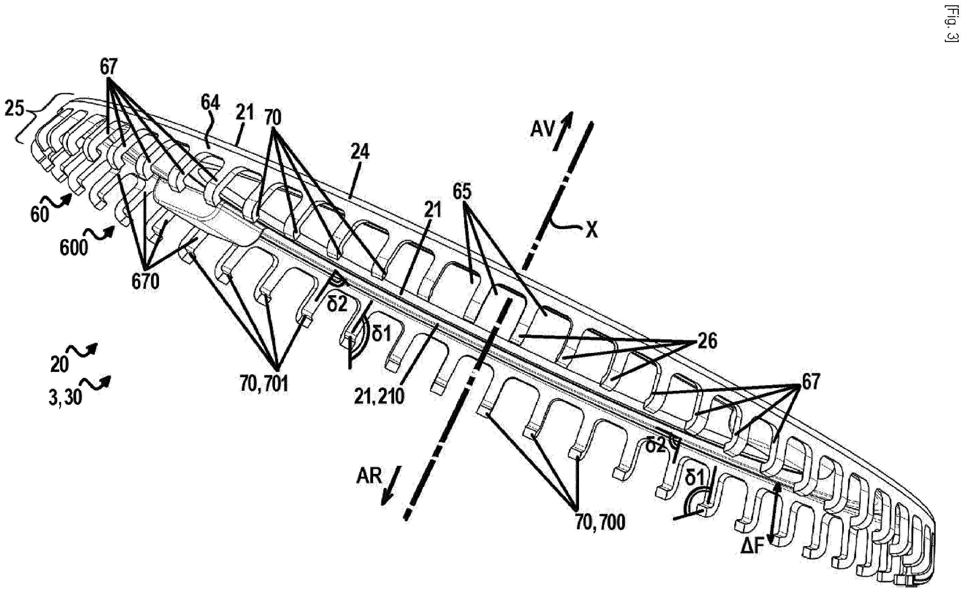

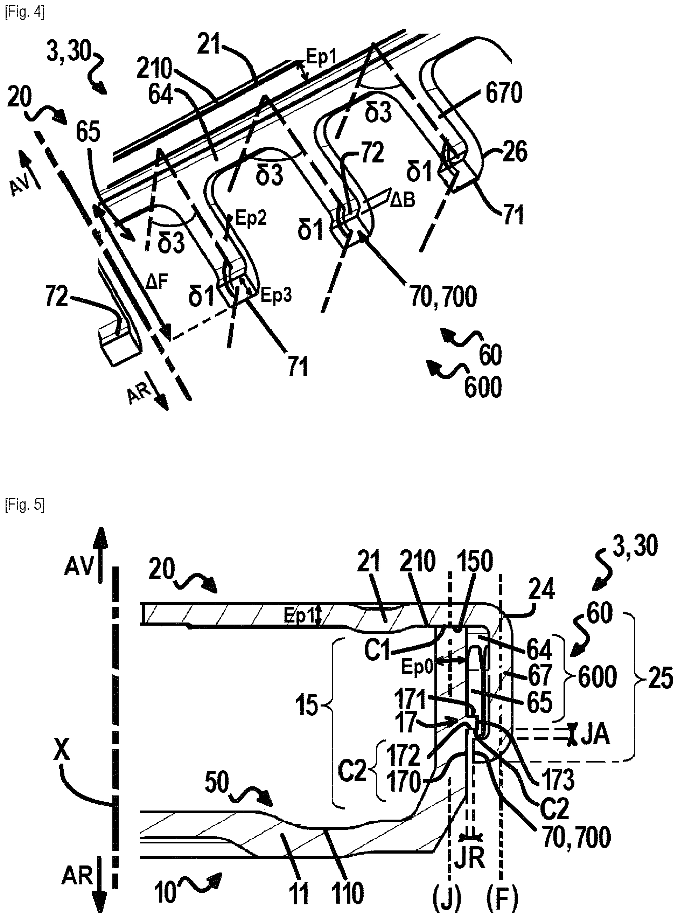

Les FIGURES 3 à 10 décrivent en détails un tel volant d'inertie 3, selon le premier mode de réalisation de l'invention.

Le premier élément rotatif 10 du volant d'inertie 3, dit embase, comprend en outre :
- une portion radiale 11, d'épaisseur Ep0 et dont l'intérieur définit un fond 110 logeant des organes élastiques 55 ;
- une jupe cylindrique 15, s'étendant vers l'avant AV depuis la périphérie externe de la portion radiale 11.

Le deuxième élément rotatif, dit couvercle 20 du volant d'inertie 3, comprend en outre :
- une portion radiale 21, d'épaisseur Ep1 et dont l'intérieur définit un fond 210 recouvrant les organes élastiques 55 ;
- un flasque 25 annulaire, s'étendant en partie vers l'arrière AR depuis la périphérie externe de la portion radiale 21 ;
- une cible 60 monobloc et issue de matière avec le flasque 25, formant la zone de lecture d'un capteur ;

Par ailleurs, la jupe cylindrique 15 s'étend vers l'avant AV et depuis la périphérie radialement externe de la portion radiale 11, autrement dit, depuis le fond 110 du premier élément rotatif 10. La jupe cylindrique 15, d'orientation axiale et de centre l'axe X, s'étend ici perpendiculairement à la portion radiale 21 de l'élément rotatif 20.

De préférence, le flasque 25, d'orientation axiale, est de forme cylindrique et de centre l'axe X. Le flasque 25 entoure au moins en partie la jupe cylindrique 15, en s'étendant ici radialement à l'extérieur de l'élément rotatif 20.

Le flasque 25 peut comprendre en outre une extrémité libre, de préférence s'étendant radialement. Notamment, le flasque 25 s'étend vers l'arrière AR et depuis la périphérie radialement externe de la portion radiale 21.

Par ailleurs, le flasque 25 est lié à la portion radiale 21, notamment par un premier rayon de courbure, nommé par la suite « congé 24 de raccordement » et résultant d'une étape de déformation secondaire distinguant ces derniers.

Dans les exemples illustrés, le congé 24 de raccordement s'étend de manière continue autour de l'axe X, sur 360 degrés, notamment depuis la portion radiale 21. Par ailleurs, le flasque 25 s'étend selon une longueur ΔF, notamment dans la direction axiale. La longueur ΔF du flasque 25 est définie axialement entre le congé 24 de raccordement et l'extrémité libre du flasque, nommé par la suite le bord additionnel 70 incurvé.

Par ailleurs, la jupe cylindrique 15 s'étend radialement entre deux flancs latéraux opposés.

Le flanc radialement interne définit un diamètre intérieur DJ1 de la jupe cylindrique.

Le flanc 170 radialement externe définit un diamètre extérieur DJ2 de la jupe cylindrique.

Par ailleurs, la jupe cylindrique 15 s'étend radialement entre les diamètres intérieur DJ1 et extérieur DJ2. Les diamètres intérieur DJ1 et extérieur DJ2 de la jupe cylindrique définissent une épaisseur Ep0 de ladite jupe.

Par ailleurs, le flasque 25 s'étend radialement entre deux flancs latéraux opposés. Le bord proximal du flasque 25, et notamment de la couronne annulaire 600, est définit par un flanc 670 radialement interne.

Le flanc 670 est formé sur celui des doigts 67 ou des bras 67'. Ce flanc 670 radialement interne définit un diamètre intérieur DF1 du flasque 25. Le flanc radialement externe définit un diamètre extérieur DF2 du flasque 25.

Par ailleurs, le flasque 25 s'étend radialement entre les diamètre intérieur DF1 et extérieur DF2. Les diamètres intérieur DF1 et extérieur DF2 du flasque 25 définissent une épaisseur Ep2 dudit flasque.

Par ailleurs, le fond 110 du premier élément rotatif forme les sièges d'appui du volant d'inertie 3.

Chaque siège d'appui est, par exemple, constitué par deux bossages, qui sont respectivement formés dans la portion radiale 11 du premier élément rotatif 10. Le couvercle 20 définit avec sa portion radiale 21 et son flasque 25, une chambre annulaire 50 dans laquelle sont logés les organes élastiques 55. Cette chambre annulaire 50 est délimitée axialement entre leur fond 110, 210 respectif. Les organes élastiques 55 sont, par exemple, des ressorts hélicoïdaux courbes qui sont circonférentiellement répartis autour de l'axe X.

Par ailleurs, la cible 60 destinée à être disposée en regard d'un capteur, non illustré. Le capteur permet de délivrer un signal représentatif de la position angulaire et/ou de la vitesse de la cible 60. Un tel capteur est notamment apte à informer le calculateur du véhicule de la position du vilebrequin, ce qui permet au calculateur du véhicule de commander correctement l'injection du carburant et, pour les moteurs à essence, l'allumage des bougies.

Par ailleurs, le flasque 25 du couvercle comprend une couronne annulaire 600, formant la cible 60, qui présente une orientation axiale. La couronne annulaire 600 définit une zone de lecture pour le capteur. Elle s'étend axialement depuis la périphérie externe du flasque 5, ici depuis sa paroi annulaire 64, jusqu'à une extrémité libre du flasque. Cette paroi annulaire 64 s'étend ici sur 360 degrés autour de l'axe X.

En outre, la couronne annulaire 600 comprend une pluralité de fenêtres 65, 65' qui sont séparées les unes des autres par des doigts 67 ou des bras 67' s'étendant dans la direction axiale, parallèlement à l'axe X. Les fenêtres sont notamment délimitées par ladite paroi annulaire 64. On peut réduire davantage la paroi annulaire 64, de sorte à prolonger axialement la longueur des fenêtres 65, 65', des doigts 67 et consécutivement de la zone de lecture de la cible 60, par exemple jusqu'au niveau de l'appui primaire C1 de la jupe cylindrique 15 avec la portion radiale 21.

Dans les exemples illustrés, la couronne annulaire 600 s'étend radialement entre :
- un bord distal opposé à la jupe cylindrique 15, définissant la face radialement externe des doigts 67 ou bras 67'; et
- un bord proximal adjacent à la jupe cylindrique 15, définissant la face radialement interne des doigts 67 ou bras 67'.

Chacun des bords distal et proximal de la couronne annulaire 600 peut présenter une forme annulaire, de contours lisses et discontinue autour de l'axe X.

Une telle structure formée d'une alternance de doigts 67 et de fenêtres 65, 65' permet à un capteur qui est fixé sur un élément non tournant du véhicule, comme par exemple le bloc moteur ou le carter de la boîte de vitesses du véhicule, et est positionné radialement en regard de la couronne annulaire 600 de détecter la position et/ou la vitesse de la cible 60. En particulier dans le premier mode, la pluralité de fenêtres 65, 65' présentent des contours de type ouvert, délimités par une série de doigts 67 espacés et répartis angulairement autour de l'axe X.

En particulier, la dimension axiale des fenêtres 65, 65' définit ici la zone de lecture pour le capteur.

A titre d'exemple, la cible 60, ici sa couronne annulaire 600, sont réalisées dans un matériau magnétique du volant d'inertie 3. La cible 60 est par exemple réalisée en tôle métallique. La cible peut être réalisée dans une tôle d'emboutissage en acier, tel que de l'acier DD13 par exemple.

En outre, le capteur est apte à détecter des variations de champs magnétiques.

Un tel capteur est par exemple un capteur actif à effet hall ou un capteur passif. Ainsi, l'alternance de doigts 67 et de fenêtres 65, 65' de la couronne annulaire 600 est apte à générer, lorsque la cible 60 est entraînée en rotation, une variation de champ magnétique qui est détectée par le capteur. Dans un autre exemple, le capteur est un capteur optique qui détecte le passage d'une fenêtre 65, 65' ou d'un doigt 67 dans son champ optique.

De manière avantageuse, au moins l'une des fenêtres, référencé 65' sur la FIGURE 1, présente une dimension circonférentielle différente de celle des autres fenêtres 65. Une telle fenêtre 65' constitue un repère permettant de déterminer la position angulaire de la cible 60. De manière alternative, un tel repère peut également être formé par un doigt 67 ayant une dimension dans la direction circonférentielle supérieure à celle des autres. Le repère peut notamment être un repère de point mort haut, c'est-à-dire qu'il se situe en regard du capteur lorsque la position du vilebrequin est telle que le piston du moteur le plus proche du nez du vilebrequin se situe en position haute.

Par ailleurs, la couronne annulaire 600 est formée par retrait de matière du couvercle, en poinçonnant ou en découpant les fenêtres 65, 65' au sein du couvercle. Dans le premier mode, les fenêtres 65, 65' issues de ce retrait de matière délimitent entre elles des doigts 67 de la couronne annulaire 600.

Par ailleurs, la position finale du flasque 25 forme avec le fond 210 un angle δ3 d'inclinaison tertiaire. La position finale des doigts 27 et des fenêtres 65, 65' forme avec le fond 210 l'angle δ3 d'inclinaison tertiaire.

Par ailleurs, la couronne annulaire 600, et notamment les fenêtres 65, 65', sont contenus dans un premier cercle F d'implantation, de centre l'axe X, tel qu'illustré notamment sur la FIGURE 1 (en traits discontinus). Le cercle F d'implantation peut être formé sur le couvercle, et il définit ladite zone de lecture pour le capteur. Le cercle F d'implantation définit ainsi la position radiale finale du flasque 25. La couronne annulaire 600, et notamment les fenêtres 65, 65', sont formés et s'étendent sensiblement selon le cercle F d'implantation. Les doigts 27 sont ici implantées selon le cercle F d'implantation.

Dans les exemples illustrés, le premier cercle F d'implantation est localisé en bordure du flasque 25 et de la portion radiale 21 du couvercle, autrement dit, au niveau du congé 24 de raccordement.

Par ailleurs, les deux éléments rotatifs 10, 20 sont mis axialement en appui l'un sur l'autre. Dans les exemples illustrés, le fond 210 du couvercle est mis en appui axial sur la jupe cylindrique 15 du premier élément rotatif 10. Cet appui axial entre éléments rotatifs 10, 20 définit un appui primaire C1 annulaire, formé sur le premier élément rotatif 10. La jupe cylindrique 15 du premier élément rotatif reçoit l'intérieur du deuxième élément rotatif 20, ici son fond 210.

De manière avantageuse, l'appui primaire C1 annulaire est formé en bout avant AV de la jupe cylindrique, ici sur l'extrémité 150 de la jupe cylindrique 15, par exemple par usinage de l'extrémité 150 de la jupe cylindrique.

L'appui primaire C1 peut être réalisé par usinage de l'extrémité axiale 150, pour obtenir une planéité de contact entre les deux éléments rotatifs 10, 20 du volant d'inertie 3, lors de leur mise en appui. On définit ici l'appui primaire C1 tel une surface d'appui plan, sur laquelle est reçu le fond 210, également d'appui plan.

De préférence, l'appui primaire C1 annulaire est circonférentiellement continue, ici sur 360 degrés.

A titre d'exemple, le deuxième élément rotatif 20 peut être fixé sur l'extrémité avant AV de la jupe cylindrique 15, au niveau de l'appui primaire C1, notamment par soudure ou tout autre moyen d'assemblage.

Par ailleurs, l'appui primaire C1 est disposé radialement en deçà du flasque 25, et il est écarté radialement de ce dernier. Notamment, la jupe cylindrique 15 et l'appui primaire C1 sont décalés axialement et radialement de la couronne annulaire 600, ces derniers n'étant jamais en contact l'un avec l'autre, pour ne pas se déformer.

Par ailleurs, la jupe cylindrique 15 définit un deuxième cercle J d'implantation, de centre l'axe X, tel qu'illustré notamment sur la FIGURE 1 (en traits discontinus). Ce cercle J d'implantation délimite la zone de mise en appui axial des éléments rotatifs 10, 20. Ce cercle J définit un appui primaire C1 de type circulaire et continue autour de l'axe X.

La jupe cylindrique 15 et l'appui primaire C1 sont contenus dans le deuxième cercle J d'implantation.

Avantageusement, le deuxième cercle J d'implantation est défini sur le flanc 170 de la jupe cylindrique.

Dans les exemples illustrés, le deuxième cercle F d'implantation peut être formé également sur le couvercle 20. Le deuxième cercle J d'implantation s'étend ici à l'intérieur dudit premier cercle d'implantation F. Le diamètre du deuxième cercle J est strictement inférieur à celui du premier cercle F d'implantation.

En fonctionnement sur véhicule, il existe des chocs, dits impacts axiaux et latéraux, contre lesquels la couronne annulaire 600 de la cible peut être endommagée. En général, ces impacts sont formés depuis l'extérieur du flasque et/ou axialement de part et d'autre de la cible pour capteur. Ces impacts résultent, au sein du système 1 amortisseur, de déplacements ou vibrations de pièces avoisinantes et extérieures audit volant d'inertie 3, et qui sollicitent le flasque du couvercle, le déformant et le détériorant de manière irréversible. Les fenêtres 65, 65' de la couronne annulaire peuvent être décalées et ne plus être contenues dans le premier cercle F d'implantation. Les impacts sont par exemple localisés sur les extrémités avant AV et arrière AR des doigts ou des bras. De ce fait, la géométrie, le parallélisme des doigts ou des bras, et consécutivement la zone de lecture de la cible pour le capteur, sont faussés.

L'invention vise notamment à préserver de manière satisfaisante la forme géométrique de la cible 60. Pour limiter la déformation des zones à risque du flasque, on peut notamment :
- ajouter une protection additionnelle au flasque, ici un bord additionnel 70 protégeant la couronne annulaire 600 ;
- agencer le flasque 25 pour qu'il prenne contact sur la jupe cylindrique 15 adjacente, pour limiter sa flexion ;
- prolonger, mettre en forme ou renforcer le flasque 25, au niveau des doigts ou des bras de la couronne annulaire.

Les exemples suivants illustrent diverses solutions pour préserver la forme géométrique de la cible.

Dans les exemples illustrés, le flasque 25 du couvercle comprend en outre un bord additionnel 70, de forme incurvée par rapport au reste du flasque 15. Ce bord additionnel 70 incurvé est formé en bout de flasque 25, autrement dit sur l'extrémité libre du flasque. Ce bord additionnel 70 incurvé forme une protection de la cible, de forme monobloc et issue de matière avec le flasque 15 et la cible 60, et il permet d'amortir les impacts axiaux et latéraux contre la couronne annulaire 600 de la cible, en particulier en venant au contact de la jupe cylindrique.

On entend par « bord additionnel incurvé 70 incurvé » une portion déformée et distincte de la couronne annulaire, protégeant cette dernière. Le bord additionnel incurvé 70 incurvé du flasque 25 est distinct d'un bord proximal de la couronne annulaire 600. En particulier, le bord additionnel 70 incurvé forme l'extrémité libre du flasque 25.

Par ailleurs, le bord additionnel 70 incurvé s'étend au moins en partie radialement à l'intérieur du premier cercle F d'implantation du flasque. Notamment, le bord additionnel 70 incurvé est disposé au moins en partie radialement entre la couronne annulaire 600 de la cible et la jupe cylindrique 15. Dans le premier mode, le bord additionnel 70 incurvé est intercalé radialement entre la couronne annulaire 600 et la jupe cylindrique 15. Le bord additionnel 70 incurvé est intercalé radialement entre les premier et deuxième cercles J, F d'implantation.

Le bord additionnel 70 incurvé est la portion libre du flasque, ici la plus proche de la jupe cylindrique 15.

De ce fait, le travail d'amortissement et de protection contre les chocs est optimisé, car l'effort du bord additionnel 70 incurvé sur la jupe cylindrique 15 s'applique sur le cercle F d'implantation du flasque 25 par rapport au cercle d'implantation J de la jupe cylindrique 15.

Dans les exemples illustrés, le bord additionnel 70 incurvé s'étend radialement vers l'intérieur, depuis la couronne annulaire 600. Le bord additionnel 70 incurvé est lié directement à la couronne annulaire, notamment par un deuxième rayon de courbure, nommé congé 26 de raccordement et résultant d'une étape de déformation primaire.

Dans le premier mode, le congé 26 de raccordement s'étend de manière discontinue autour de l'axe X, depuis lesdits doigts 67. Par ailleurs, le bord additionnel 70 incurvé s'étend selon une longueur ΔB, notamment dans la direction radiale. Ladite longueur ΔB est définie axialement entre les périphéries radialement interne et externe dudit bord additionnel 70 incurvé, plus précisément depuis le congé 26 de raccordement.

Le bord additionnel 70 incurvé s'étend en direction de l'axe X, notamment de la jupe cylindrique 15. Lors d'impacts sur le flasque 25, le bord additionnel 70 incurvé est configuré pour coopérer avec la jupe cylindrique 15.

En d'autres termes, le bord additionnel 70 incurvé peut venir au contact de la jupe cylindrique 15, pour limiter la flexion de la cible du flasque. Cette mise en contact du bord additionnel 70 incurvé sur la jupe cylindrique 15 peut s'exercer de manière ponctuelle ou permanente. Cette mise en contact définit un appui secondaire C2.

On entend par « appui secondaire C2 » un appui localisé et distinct de l'appui primaire C1 de la jupe cylindrique. Les appuis primaire C1 et secondaire C2 de la jupe cylindrique sont décalés axialement l'un de l'autre. Les appuis primaire C1 et secondaire C2 peuvent être formés sensiblement à une même distance radiale par rapport à l'axe X.

Ainsi, la mise en contact, même ponctuel, du bord additionnel 70 incurvé sur l'appui secondaire C2 de la jupe cylindrique amortit en majeur partie les impacts. Cet appui secondaire C2 est formé au moins en partie le long de la jupe cylindrique 15, en particulier, de manière partiellement sur le flanc 170 de la jupe cylindrique 15.

On concentre ici les impacts de pièces contre le flasque au niveau de son bord additionnel 70 incurvé, sans que ces derniers ne puissent endommager de manière irréversible la couronne annulaire. La déformation s'exerce ainsi sur le flasque et la cible de manière satisfaisante.

De préférence, l'appui primaire C1 annulaire est circonférentiellement continue, notamment sur 360 degrés.

Dans les exemples illustrés aux FIGURES 1-22, l'appui secondaire C2 est disposé radialement en regard du bord additionnel 70 incurvé. L'appui secondaire C2 est formé sur une face arrière AR de la jupe cylindrique 15, ici le flanc 170. L'appui secondaire C2 est ici formé au niveau du diamètre extérieur DJ2 de la jupe cylindrique. La couronne annulaire 600 entoure l'appui secondaire C2. L'appui secondaire C2 est disposé radialement en deçà de la couronne annulaire 600.

Par ailleurs, l'appui secondaire C2 est distant de la couronne annulaire 600, de manière à ne pas impacter cette dernière. Notamment, l'appui secondaire C2 est décalé axialement de la couronne annulaire 600.

Notamment, les flancs 170 et 670 respectivement de la jupe cylindrique et du flasque sont distant l'un de l'autre. L'appui secondaire C2 est espacé radialement de la couronne annulaire 600, selon un écartement radial ΔR.

En particulier, l'écartement radial ΔR est défini entre les flancs 170 et 670 respectivement de la jupe cylindrique et du flasque. L'écartement radial ΔR est non nul. Par ailleurs, l'écartement radial ΔR peut être défini radialement entre les premier et deuxième cercles J, F d'implantation.

Avantageusement, la jupe cylindrique 15 comprend en outre un épaulement 17. L'épaulement 35 peut former une butée ou une retenue radiale pour le bord additionnel 70 incurvé. L'épaulement 17 est agencé pour arrêter progressivement le déplacement axial du bord additionnel 70 incurvé.

L'appui secondaire C2 est formé conjointement par l'épaulement 35 et le flanc 170 de la jupe cylindrique 15.

L'épaulement 17 est ici réalisé depuis l'extérieur de la jupe cylindrique 15, autrement dit depuis le flanc 170 de la jupe cylindrique 15, par exemple par un outillage de formage à froid.

De préférence, l'épaulement 17 est formé depuis le diamètre extérieur DJ2 de la jupe cylindrique 15.

Dans le premier mode, l'épaulement 17 forme une nervure annulaire, s'étendant depuis le diamètre extérieur DJ2. A titre d'exemple, l'épaulement 17 peut être réalisé par usinage ou forgeage.

Par ailleurs, l'épaulement 17 s'étend entre deux faces 171, 172 opposées, située respectivement sur l'avant AV et l'arrière AR. Les faces 171, 172 opposées peuvent s'étendre de manière inclinée ou au droit du bord additionnel 70. Les deux faces latérales 71, 72 sont liées entre elles par une surface axiale 173, qui forme une section ou surface mince. Cette surface axiale 73 de l'épaulement 17 est de préférence distante de la couronne annulaire 600.

Par ailleurs, l'épaulement 17 s'étend ici de manière continue tout autour de l'axe X. Dès lors, les faces 171, 172 s'étend continuellement autour de l'axe X, sur 360 degrés.

Par ailleurs, le bord additionnel 70 incurvé s'étend depuis la couronne annulaire 600 sous une forme courbée.

Dans le premier mode, le bord additionnel 70 incurvé est discontinue autour de l'axe X. Le bord additionnel 70 incurvé est ménagé depuis les doigts 67 de la couronne annulaire, notamment sur chacun des doigts 67.

Par ailleurs, le bord additionnel 70 s'étend axialement entre deux faces latérales 71, 72 opposées, situées respectivement sur l'avant AV et l'arrière AR. Les deux faces latérales 71, 72 définissent entre elles l'épaisseur Ep3 du bord additionnel 70 incurvé. Les deux faces latérales 71, 72 sont liées entre elles par une tranche 700 de l'épaisseur Ep3 du bord additionnel 70 incurvé. On entend par « tranche », une section ou surface mince, ici d'épaisseur Ep3, située généralement en extrémité du bord additionnel 70 incurvé (par opposition au terme flanc).

Dans le premier mode, le bord additionnel 70 incurvé s'étend au droit de la jupe cylindrique 15, c'est-à-dire radialement et perpendiculairement à la jupe cylindrique. La zone d'appui du flasque est formée sur la tranche 700 de l'épaisseur Ep3 du bord additionnel 70 incurvé. Notamment, le bord additionnel 70 incurvé présente une forme en L.

En particulier, le bord additionnel 70 incurvé s'étend parallèlement à la portion radiale 21 dudit couvercle.

Dans les exemples illustrés, les épaisseurs Ep3, Ep2, Ep1 respectivement du bord additionnel 70 incurvé, du flasque 25 et de la portion radiale 21 du couvercle sont sensiblement égales entre elles.

Par ailleurs, le bord additionnel 70 incurvé comprend au moins une zone en contact avec la jupe cylindrique 15, dit zone d'appui du flasque. Cette zone d'appui est définie sur l'extrémité radialement interne du bord additionnel 70 incurvé, autrement dit sur son extrémité libre, et elle est destinée à coopérer avec l'appui secondaire C2.

A titre d'exemple, chaque zone d'appui du flasque peut être de forme plane ou bombée.

De préférence, le bord additionnel 70 incurvé comprend deux zones de contact :
- l'une dite axiale, qui peut coopérer avec l'appui secondaire C2, notamment avec le flanc 170 de la jupe cylindrique. La tranche 700 du bord additionnel 70 incurvé définit ici une zone de contact s'étendant axialement ;
- l'autre dite radiale, qui peut coopérer avec l'appui secondaire C2, notamment avec la face d'appui 72 de l'épaulement. La face 72 du bord additionnel 70 incurvé définit ici une autre zone de contact s'étendant radialement ;

A titre d'exemple, le bord additionnel 70 incurvé est ici initialement espacé de l'appui secondaire C2 de la jupe cylindrique 15, selon un jeu fonctionnel JA axial. Ce jeu fonctionnel JA axial est inférieur à une distance radiale susceptible d'entraîner une déformation plastique de la couronne annulaire, et notamment des doigts 67.

Ce jeu fonctionnel JA axial est typiquement inférieur à 3 mm, par exemple de l'ordre de 0,5 mm.

Dans le premier mode, ce jeu fonctionnel JA axial est défini entre la face 72 du bord additionnel et la face latérale 71, 72 arrière AR de l'épaulement 17. Le bord additionnel 70 incurvé est initialement espacé de l'appui secondaire C2 de la jupe cylindrique 15, selon un jeu fonctionnel JR radial. Ce jeu fonctionnel JR radial est inférieur à une distance radiale susceptible d'entraîner une déformation plastique de la couronne annulaire, notamment des doigts 67.

Ce jeu fonctionnel JR radial est typiquement inférieur à 3 mm, par exemple de l'ordre de 0,5 mm.

Dans le premier mode, ce jeu fonctionnel JR radial est défini entre la tranche 700 du bord additionnel et le flanc 170 de la jupe cylindrique. A titre d'exemple, l'écartement radial ΔR peut être défini radialement par la somme de la longueur ΔB du bord additionnel et du jeu fonctionnel JR radial.

Par ailleurs, les formes finales du flasque 25, de la cible 60 et du bord additionnel 70 incurvé, sont réalisées par un succession de déformations du couvercle. Notamment, on réalise par déformation dit « primaire » du couvercle 20, la forme finale de type incurvée du bord additionnel 70 incurvé.

Pour ce faire, on prolonge la matière du flasque et notamment la forme des doigts 67 au-delà de la longueur nécessaire pour former la cible 60. Cette longueur additionnelle de type incurvé des doigts est ensuite déformée, par déformation primaire, pour former le bord additionnel incurvé 70 incurvé.

On réalise notamment deux autres déformations du couvercle 20, dites « secondaires » et « tertiaire », pour produire la forme et la position finales du flasque, et notamment celles de la cible et du bord additionnel incurvé 70 incurvé.

Le fond 210 est formé par une déformation dite secondaire. La déformation secondaire définit aussi les forme et position intermédiaires du flasque. La déformation secondaire peut être un embouti ou un pliage du couvercle.

La forme finale de la cible 60, et notamment sa zone de lecture, est formée par une déformation dite tertiaire. La déformation secondaire définit aussi une forme et une position finale du flasque, qui sera contenu dans le premier cercle F d'implantation. La déformation tertiaire peut être un embouti ou un pliage du couvercle.

Par suite, il peut être possible selon l'invention :
- de modifier la forme du bord additionnel 70 incurvé, afin de le soumettre à des efforts plus importants ; et/ou
- de réduire l'écartement radial ΔR entre la cible et la jupe cylindrique, afin d'optimiser l'encombrement ; et/ou
- de réduire le nombre des doigts et/ou d'augmenter les zones de contacts ; et/ou
- de réduire le jeu fonctionnel JA et/ou JR jusqu'à devenir nul ;

Dans les exemples illustrés, ledit volant d'inertie 3 est le volant d'inertie primaire 30 du système amortisseur.

Dans un autre mode de réalisation non illustré, c'est le volant d'inertie secondaire qui peut reproduire les caractéristiques précédemment décrites dudit volant d'inertie.

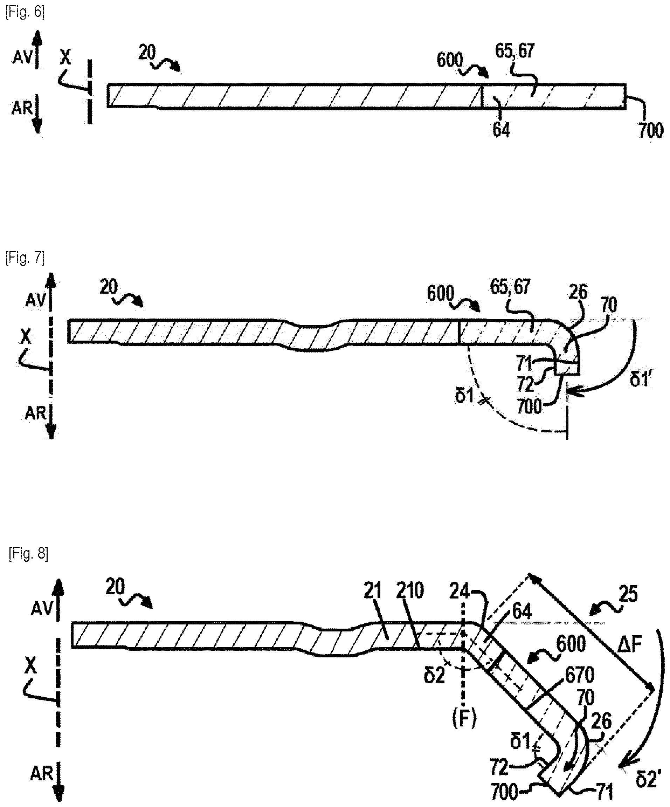

On va maintenant décrire le procédé de fabrication du volant d'inertie 3 du premier mode de réalisation de l'invention, tel qu'illustré sur les FIGURES 6 à 10. La fabrication comporte, entre autre, les étapes suivantes :

Selon une première étape, on fournit un premier et un deuxième éléments rotatifs 10, 20, d'axe X de révolution, qui constituent le volant d'inertie 3, ici du volant d'inertie primaire 30.

Notamment, le premier élément rotatif 10 est réalisé par forgeage et usinage.

Notamment, le deuxième élément rotatif 20 est formé d'une seule tôle 100, de préférence en acier, qui est délimitée radialement entre un pourtour interne et un pourtour externe, fermés et circulaires, de centre et d'axe X.

Selon une deuxième étape (illustrée en FIGURE 6), on évide une partie de la matière du deuxième élément rotatif 20, pour former une couronne annulaire, notamment par découpe ou poinçonnage de la tôle 100. Ce retrait de matière forme les fenêtres 65, 65'. Ce retrait de matière est réalisé depuis le pourtour externe de la tôle 100, autrement dit sur l'extrémité radialement externe, pour former des fenêtres 65, 65' radialement ouvertes vers l'extérieur.

Selon une troisième étape (illustrée en FIGURE 7), on déforme le deuxième élément rotatif 20, selon une déformation dite primaire, pour former un bord additionnel 70 incurvé par rapport au reste dudit élément rotatif 20.

La déformation primaire est réalisée par emboutissage ou par pliage du deuxième élément rotatif 20. Ledit élément rotatif 20 est ici courbée, la déformation primaire étant réalisée depuis le pourtour externe de la tôle 100.

Par ailleurs, le bord additionnel 70 incurvé forme avec la couronne annulaire 600, un angle δ1 ou δ1' d'inclinaison dit angle primaire, qui est issu de la déformation primaire. On mesure arbitrairement cet angle δ1 ou δ1' primaire, issu de la déformation primaire, dans le sens horaire ou antihoraire. Dans ce premier mode, l'angle δ1 primaire est un angle compris entre 50 et 180 degrés. Dès lors, la valeur de l'angle δ1' est égale à « 180- δ1 » degrés.

En particulier, l'angle δ1 est un angle droit, de 90 degrés et réalisé par la déformation primaire. Le bord additionnel 70 incurvé s'étend donc au droit de la couronne annulaire 600, perpendiculairement à la couronne annulaire 600. Cette déformation primaire définit notamment la forme finale du bord additionnel 70.

Lors de la déformation primaire, le bord additionnel 70 incurvé forme avec la couronne annulaire 600, un congé 26 de raccordement. Ce congé 26 de raccordement est localisé à une distance radiale du pourtour externe de la tôle 100. Cette distance est définie par la longueur ΔB définissant la dimension radiale finale du bord additionnel 70.

Selon une quatrième étape (illustrée en FIGURE 8), on déforme le deuxième élément rotatif 20, selon une déformation dite secondaire (différente de la déformation primaire), pour former distinctement:
- une portion radiale 21 qui définit un fond 210 ; et
- un flasque 25 sur lequel sont formés la couronne annulaire 600 et le bord additionnel 70 incurvé.

La déformation secondaire est réalisée par formage à froid, ou par emboutissage ou par pliage du deuxième élément rotatif 20. Dans ce premier mode, l'élément rotatif 20 est marqué et plié lors de la déformation secondaire.

La déformation secondaire est localisée à une distance radiale du pourtour externe de la tôle 100. Cette distance est définie par la longueur ΔF qui définira notamment la dimension axiale finale du flasque 25. La longueur ΔF peut être ici strictement supérieur au dimension radial de la couronne annulaire, pour former la paroi annulaire 64.

En d'autres termes, la déformation secondaire est formée sur une portion espacée du pourtour externe de la tôle 100, notamment selon une longueur ΔF. Cet espacement définira notamment la dimension axiale finale du flasque 25.

Par ailleurs, le flasque 25 est incliné par rapport à la portion radiale 21. Le flasque 25 forme avec le fond 110 un angle δ2 ou δ2' d'inclinaison, dit angle secondaire ou angle de prédéformation du flasque. On mesure arbitrairement cet angle δ2 ou δ2' secondaire, issu de la déformation secondaire, dans le sens horaire ou antihoraire. Dans ce premier mode, l'angle δ2 secondaire est un angle obtus supérieur à quatre-vingt-dix degrés. En particulier, l'angle δ2 est égal à environ 130 degrés. Dès lors, la valeur de l'angle δ2' est égale à « 180- δ2 » degrés.

Cet angle δ2 secondaire du flasque est ici supérieur à l'angle δ1 primaire du bord additionnel 70 incurvé.

Par ailleurs, la déformation secondaire peut être définie selon un premier cercle F d'implantation. Le cercle d'implantation F est espacé du pourtour externe de la tôle 100, selon ladite longueur ΔF. Le diamètre du premier cercle F d'implantation est strictement supérieur au diamètre extérieur DJ2 de jupe cylindrique 25.

Lors de la déformation primaire, le flasque 25 forme avec la portion radiale 21, un congé 24 de raccordement. Ce congé 24 de raccordement est localisé à une distance radiale du pourtour externe de la tôle 100 et du bord additionnel 70 incurvé. Cette distance définie la longueur ΔF axiale finale du flasque 25.

A titre d'exemple, le premier cercle d'implantation F traverse en outre ledit congé 24 de raccordement.

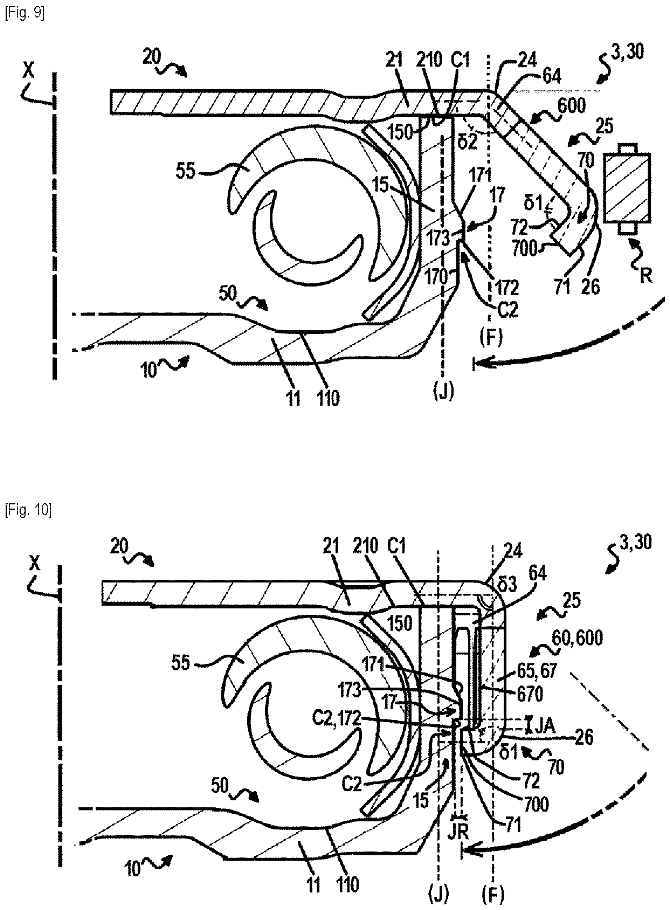

Selon une cinquième étape (illustrée en FIGURE 9), on met en appui axial le fond 210 du deuxième élément rotatif 20 sur le premier élément rotatif 10. Cet appui axial définit l'appui primaire C1. Lors de la mise en appui, la jupe cylindrique 15 est disposée l'intérieur du premier cercle F d'implantation issu de la déformation secondaire. La jupe cylindrique 15, notamment le flanc 170, est distante du premier cercle F d'implantation selon un écartement radial ΔR.

La mise en appui du fond 210 sur la jupe cylindrique 15 est définie selon un deuxième cercle J d'implantation.

Selon une sixième étape (illustrée aux FIGURES 9 à 10), on déforme le flasque 25 par rabattement, selon une déformation dite tertiaire (différente de la déformation secondaire). Par « rabattement », on entend rabattre le flasque 25 en direction de l'axe X. Autrement dit, on enfonce le flasque 25 radialement vers l'intérieur.

La déformation tertiaire est réalisée par formage à froid, ici par roulage, ou en variante non illustrée par pliage.

La déformation tertiaire est réalisée notamment par un outillage de formage à froid, ici au moins un rouleau R.

Lors de la déformation dite tertiaire, le flasque 25 est rabattu, c'est-à-dire enfoncer vers l'intérieur, jusqu'à être contenu dans le premier cercle F d'implantation. La couronne annulaire définit alors une zone de lecture dit cible pour capteur, qui est délimitée par le premier cercle F d'implantation.

A titre d'exemple, la déformation tertiaire est réalisée grâce à un ou plusieurs rouleaux R profilés qui peuvent être disposés concentriquement autour du flasque 25, en particulier autour du congé 26 de raccordement. La déformation tertiaire est réalisée par exemple avec trois rouleaux R profilés, disposés tout autour du flasque.

En particulier, le flasque 25 est rabattu par le rouleau R jusqu'à ce que le congé 26 de raccordement soit contenu dans le premier cercle F d'implantation. Le ou les rouleaux R profilés se déplacent le long du flasque 25 et du congé 26 de raccordement, rabattant ces derniers par enfoncement. Le déplacement d'un rouleau R peut être interrompu sur le flasque et ce, juste avant qu'il n'atteigne radialement le premier cercle F d'implantation.

Dans le premier mode, le flasque 25 est rabattu jusqu'à ce que la tranche 700 du bord additionnel 70 incurvé soit disposée en regard de l'appui secondaire C2 de la jupe cylindrique 15. Le flasque est alors incliné par rapport au fond 210 selon un autre angle δ3 d'inclinaison, dit angle tertiaire ou angle de déformation finale.

Cet angle δ3 d'inclinaison tertiaire du flasque est ici un angle droit, ici égal à 90 degrés. La forme finale du flasque 25 s'étend dès lors parallèlement à l'axe X. Cet angle δ3 d'inclinaison tertiaire du flasque est ici égale à l'angle δ1 primaire du bord additionnel 70 incurvé.

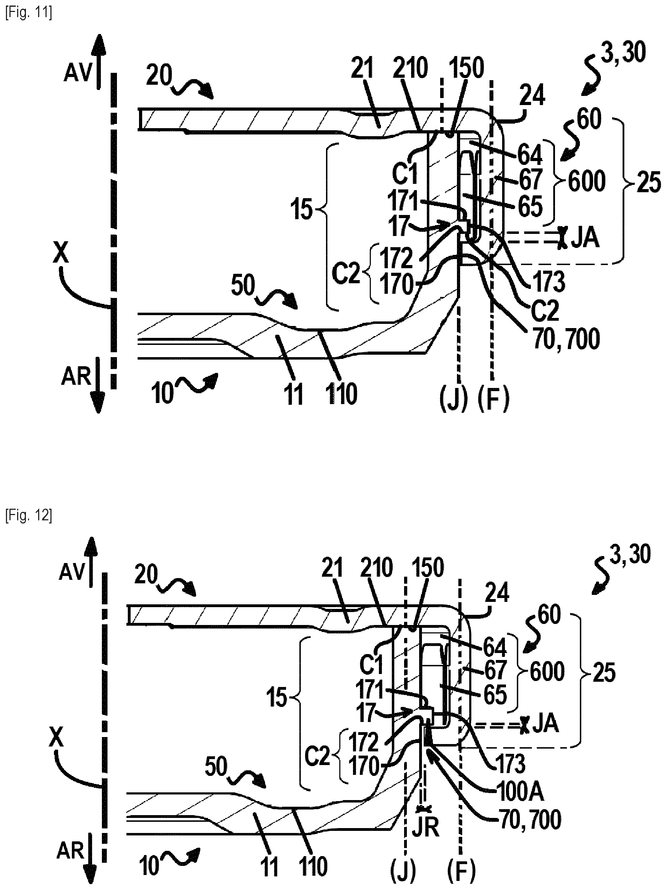

On a décrit sur la [Fig. 11] un deuxième mode de réalisation de l'invention, sensiblement similaire au premier mode de réalisation, à l'exception du fait que : le bord additionnel 70 incurvé est initialement en appui axial sur l'appui secondaire C2 de la jupe cylindrique. Cet appui est donc ici permanent entre les pièces. Le jeu fonctionnel JR radial est nul. L'écartement radial ΔR peut être égale à la longueur ΔB du bord additionnel 70 incurvé.

Dans ce deuxième mode, le bord additionnel 70 incurvé, définissant la zone de contact, est directement en appui sur l'appui secondaire C2 de la jupe cylindrique 25. La tranche 100, définissant la zone de contact du bord additionnel 70 incurvé, est ici directement en appui sur le flanc 170 de la jupe cylindrique.

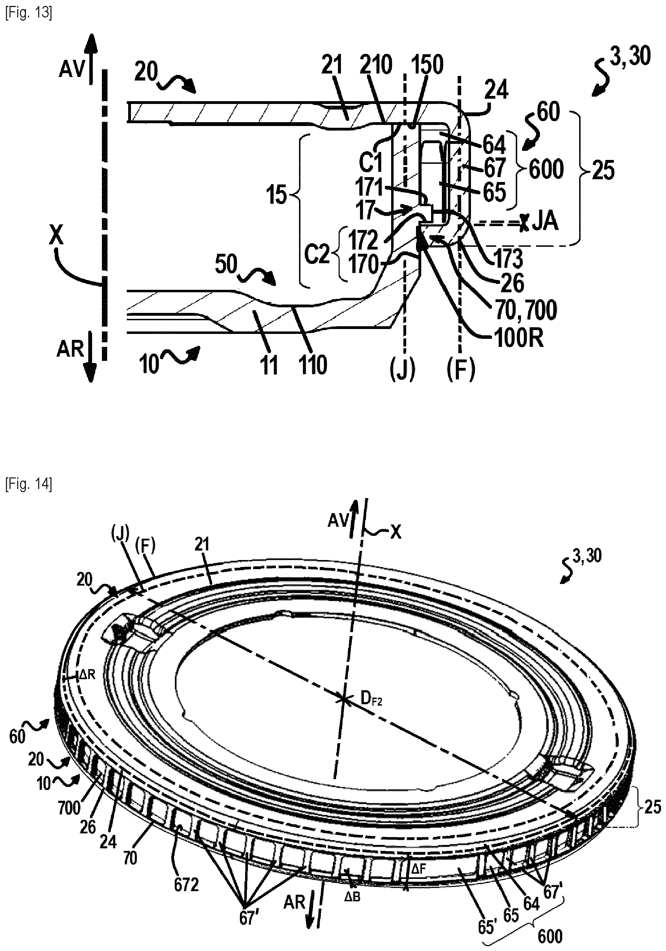

On a décrit sur les [Fig. 12] à [Fig. 13] un troisième mode de réalisation de l'invention, sensiblement similaire au premier mode de réalisation, à l'exception du fait que le bord additionnel 70 incurvé du flasque 25 et l'appui secondaire C2 de la jupe cylindrique 15 sont liés ensemble au moyen d'une soudure 100A, 100R. Chaque soudure peut s'étendre le long de l'axe X, en particulier en direction de la portion radiale 21.

Selon ce troisième mode, la soudure 100A, 100R est positionnée sur l'extrémité radialement interne du bord additionnel 70 incurvé, ici ladite tranche 700.

Sur la FIGURE 12, la soudure 100A lie le bord additionnel 70 à l'épaulement 17. Notamment, la soudure 100A est formée conjointement sur la face latérale 72 du bord additionnel 70 et la face 172 opposée de l'épaulement 17.

Sur la FIGURE 13, la soudure 100R lie le bord additionnel 70 au flanc 170 de la jupe cylindrique. Notamment, la soudure 100R est formée conjointement sur la tranche 700 du bord additionnel 70 et sur le flanc 170.

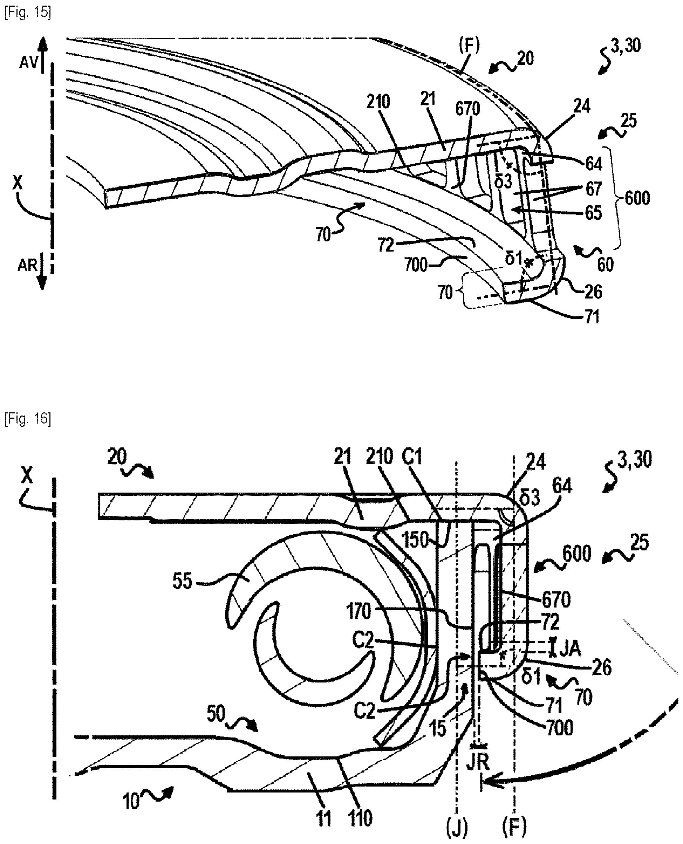

On a décrit sur les [Fig. 14] à [Fig. 15] un quatrième mode de réalisation de l'invention, sensiblement similaire au premier mode de réalisation, à l'exception du fait que le bord additionnel 70 incurvé est continue autour de l'axe X

Selon ce mode de réalisation, le bord additionnel 70 incurvé s'étend circonférentiellement sur 360 degrés, par exemple sous la forme d'une collerette continue d'axe X.

Selon ce mode de réalisation, les fenêtres 65, 65' sont ici délimitées en partie par le bord additionnel 70 incurvé. La pluralité de fenêtres 65, 65' présentent des contours 672 de type fermé, délimités par une série de bras 67' espacés et répartis angulairement autour de l'axe X. Les bras s'étendent parallèlement à l'axe X et ils sont contenus dans le premier cercle F d'implantation. En particulier, la tranche 700 est une surface cylindrique continue sur 360 degrés.

Selon ce quatrième mode, le congé 26 de raccordement s'étend de manière continue autour de l'axe X, depuis lesdits bras 67'. De manière analogue au premier mode, le bord additionnel 70 incurvé s'étend selon une longueur ΔB, pouvant être définie axialement depuis le congé 26 de raccordement.

On a décrit sur la [Fig. 16] un cinquième mode de réalisation de l'invention, sensiblement similaire au premier mode de réalisation, à l'exception du fait que l'appui secondaire C2 est de forme annulaire autour de l'axe X.

Selon ce mode de réalisation, la jupe est exempte d'épaulement, de nervure ou de forme additionnel de protection. Notamment, l'appui secondaire C2 de la jupe cylindrique peut être défini axialement tout le long de la jupe cylindrique. L'appui secondaire C2 est ici défini uniquement sur le flanc 170 de la jupe cylindrique.

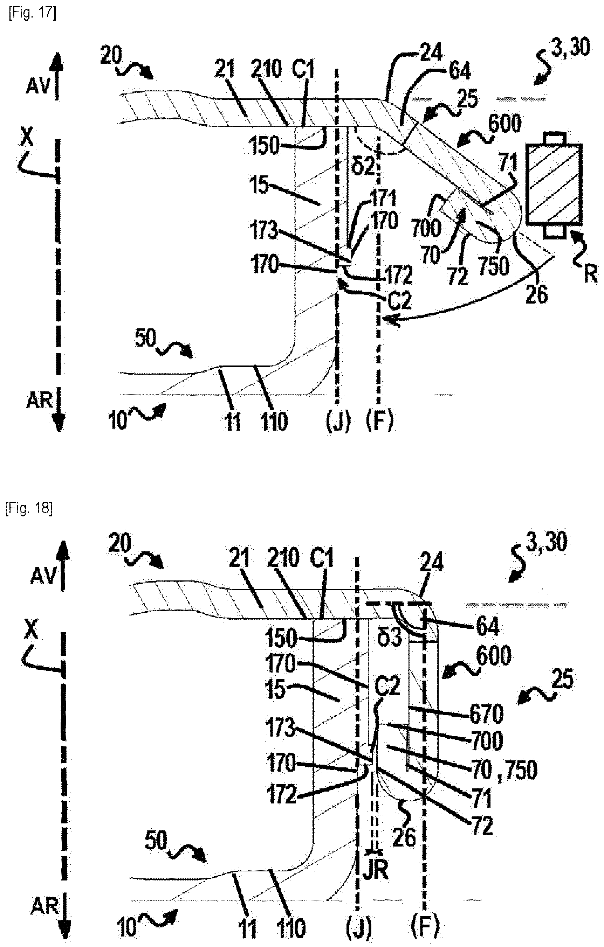

On a décrit sur les [Fig. 17] à [Fig. 18], un sixième mode de réalisation de l'invention sensiblement similaire au premier mode de réalisation, à l'exception du fait que le bord additionnel 70 incurvé est formé d'un bourrelet de matière, notamment d'un repli de matière 750 du flasque, réalisé lors de la déformation primaire.
Un repli de matière 750 peut être contenu au-delà de la jupe cylindrique 15.

Dans ce sixième mode, l'extrémité libre du flasque est recourbée sur elle-même, sous une forme arrondie, lors de la déformation primaire. On réalise ce repli de matière 750 à l'intérieur de la couronne annulaire 600 lors de la déformation primaire. Ce repli de matière du bord additionnel incurvé est réalisé par cintrage ou pliages multiples, en particulier par pliage à plat du bord additionnel 70 incurvé. Le repli de matière 750 est ensuite rabattu par enfoncement dudit rouleau R, radialement vers l'intérieur, en direction de l'axe X, lors de la déformation tertiaire.

Les FIGURE 17 à 18 illustrent ici l'étape de déformation tertiaire du procédé de fabrication du volant d'inertie 3. Ce repli de matière est ici intercalé radialement entre les premier et deuxième cercles J, F d'implantation.

Selon ce mode de réalisation, l'angle δ1 d'inclinaison primaire du bord additionnel 70 incurvé est nul, sensiblement égal à zéro degré, du fait du bourrelet ou du repli de matière. Les valeurs d'angles δ2, δ3 d'inclinaison respectivement secondaire et tertiaire du flasque, sont strictement supérieures à celle de l'angle δ1 d'inclinaison primaire du bord additionnel incurvé. L'angle δ3 d'inclinaison est strictement supérieur à l'angle δ2 d'inclinaison.

Dans ce mode, le flasque forme avec la portion radiale 210 du deuxième élément rotatif, ici avec son fond 210, un angle δ3 d'inclinaison tertiaire du flasque qui est strictement supérieur à l'angle δ1 d'inclinaison primaire du bord additionnel incurvé. L'angle δ2 d'inclinaison secondaire, réalisé lors de la déformation secondaire, est strictement supérieur à 90 degrés, ici de 145 degrés. L'angle δ3 d'inclinaison tertiaire, réalisé lors de la déformation tertiaire, est ici un angle droit.

De manière avantageuse, pour ce sixième mode de réalisation :
- Ce repli de matière définit une forme en U ou en J du bord additionnel 70 incurvé. L'une des branches du U ou J, ici l'extrémité libre et/ou la tranche 700, sont situées au plus près de la jupe cylindrique 15. Ce repli de matière définit une zone de contact plane avec l'appui secondaire C2, définie par exemple sur l'une des branches du U ou du J ;
- Le bord additionnel 70 incurvé s'étend le long de la couronne annulaire 600, ici sur le flanc 670 ;
- Le bord additionnel 70 incurvé recouvre la couronne annulaire 600, pour la protéger contre les impacts de la jupe ;
- Le bord additionnel 70 incurvé est adjacent du bord proximal de la couronne annulaire 600, ici le flanc 670 ;
- L'une des faces 71 du bord additionnel 70 est disposé en regard du flanc 670 de la couronne annulaire ;
- L'autre face 72 du bord additionnel 70 est disposé en regard de l'appui secondaire C2 ;
- Avantageusement, le bord additionnel 70 est ici en regard de l'épaulement 17, ici de sa surface axiale 173, de sorte à recevoir le bord additionnel 70 ;

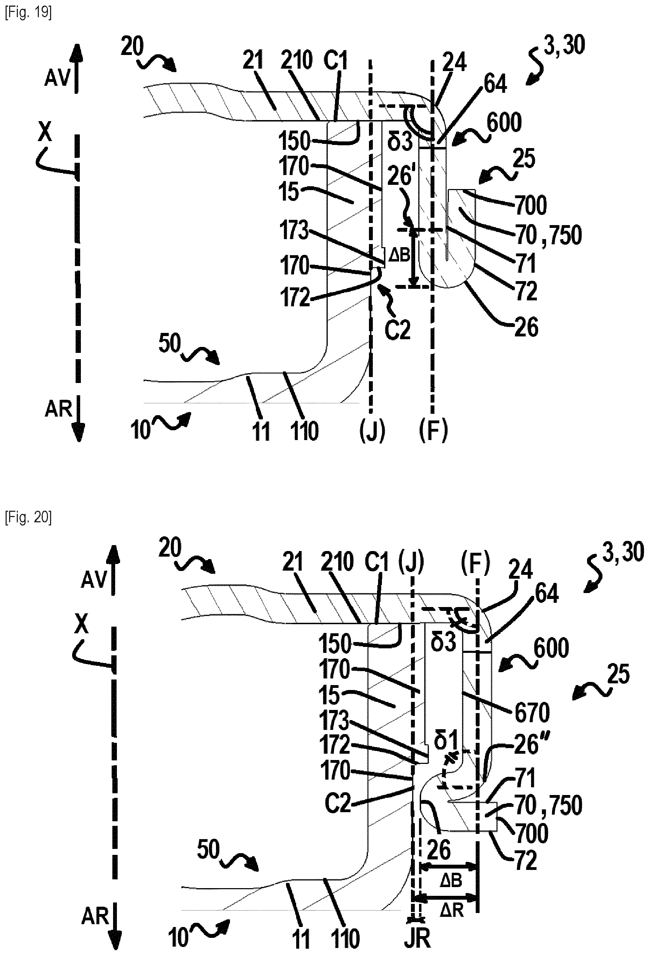

On a décrit sur les [Fig. 19] à [Fig. 20], un septième mode de réalisation de l'invention sensiblement similaire au premier mode de réalisation, à l'exception du fait que le bord additionnel incurvé s'étend partiellement à l'intérieur du premier cercle d'implantation.

Selon ce mode de réalisation, le bord additionnel 70 incurvé est formé d'un bourrelet de matière ou d'un repli de matière 750 du flasque, réalisé lors de la déformation primaire. On réalise ici un repli de matière 750 à l'extérieur de la couronne annulaire 600 lors de la déformation primaire. Un tel repli de matière du bord additionnel incurvé est réalisé par cintrage ou pliages multiples, en particulier par pliage à plat du bord additionnel 70 incurvé.

Selon le sixième mode de réalisation, ce repli de matière définit une forme en U ou en J du bord additionnel 70 incurvé. L'une des branches du U ou du J, ici l'extrémité libre et/ou la tranche 700, sont situées au plus loin de l'axe X. La forme du U ou du J est alors renversée, la base du U ou du J étant située au plus près de la jupe cylindrique 15. En particulier, ce repli de matière 750 est ensuite rabattu par enfoncement dudit rouleau R, radialement vers l'intérieur, en direction de l'axe X, lors de la déformation tertiaire.

De manière additionnelle, on peut courber le repli de matière 750, en prenant appui sur l'une des branches du U ou du J. Lors de la déformation tertiaire, on courbe le repli de matière 750 depuis un renfoncement 26'.

Les FIGURE 17 à 18 illustrent notamment cette étape additionnelle de déformation tertiaire du procédé de fabrication du volant primaire 3. Ce repli de matière est alors intercalé radialement en partie entre les premier et deuxième cercles J, F d'implantation.

Selon ce mode de réalisation, l'angle δ1 d'inclinaison primaire du bord additionnel 70 incurvé est nul, sensiblement égal à zéro degré, du fait du bourrelet ou du repli de matière. Les valeurs d'angles δ2, δ3 d'inclinaison respectivement secondaire et tertiaire du flasque, sont strictement supérieures à celle de l'angle δ1 d'inclinaison primaire du bord additionnel incurvé. L'angle δ3 d'inclinaison est strictement supérieur à l'angle δ2 d'inclinaison.

Dans ce mode, le flasque forme avec la portion radiale 210 du deuxième élément rotatif, ici avec le côté opposé au fond 210, un angle δ3 d'inclinaison tertiaire du flasque qui est strictement supérieur audit l'angle δ1 d'inclinaison primaire du bord additionnel 70 incurvé. L'angle δ2 d'inclinaison secondaire, réalisé lors de la déformation secondaire, est strictement supérieur à 90 degrés, ici de 145 degrés. L'angle δ3 d'inclinaison tertiaire, réalisé lors de la déformation tertiaire, est ici un angle droit.

De manière avantageuse, pour ce septième mode de réalisation :
- Ce repli de matière définit une forme en U ou du J du bord additionnel 70 incurvé ;
- L'une des branches du U ou du J, ici l'extrémité libre ou la tranche 700, sont situées au plus loin de la jupe cylindrique 15 ;
- La forme du U ou du J est ici renversée, la base du U ou du J étant située au plus près de la jupe cylindrique ;
- Le bord additionnel 70 incurvé s'étend le long de la couronne annulaire 600, ici opposée au flanc 670.
- Le bord additionnel 70 incurvé recouvre la couronne annulaire 600, pour la protéger contre les impacts de la jupe.
- Le bord additionnel 70 incurvé est adjacent du bord proximal de la couronne annulaire 600, ici le flanc 670 ;
- Les faces 71 et 72 du bord additionnel 70 sont disposés axialement de part et d'autre de l'appui secondaire C2.
- Ce repli de matière définit une pluralité de congé 26, 26" ;
- Ce repli de matière définit une zone de contact bombé avec l'appui secondaire C2, définie par exemple par la base du U ou du J reliant ses deux branches ;
- Avantageusement, le bord additionnel 70 est ici décalé au moins en partie axialement de l'épaulement 17 ;

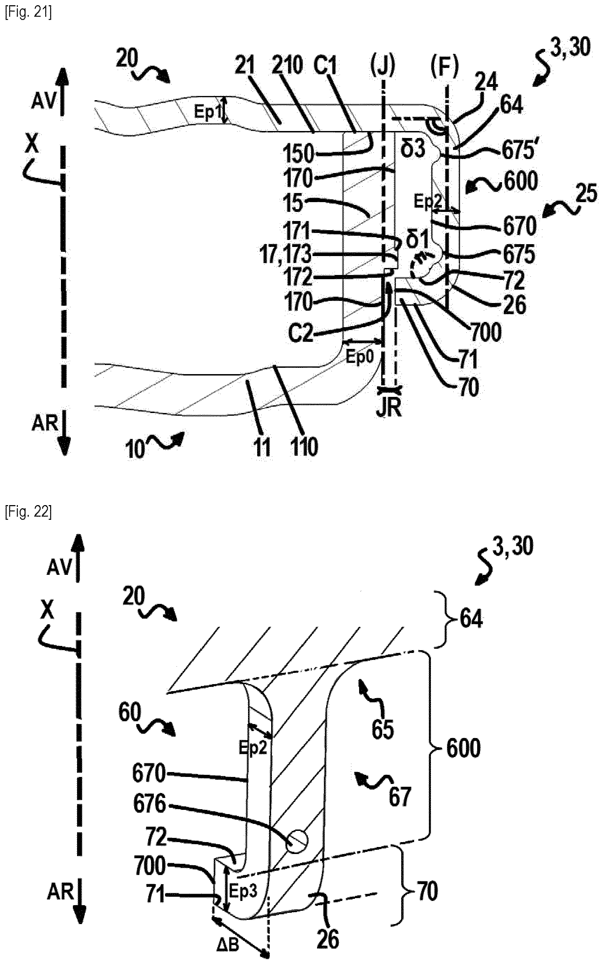

On a décrit sur la [Fig. 21], un huitième mode de réalisation de l'invention sensiblement similaire au premier mode de réalisation, à l'exception du fait que la couronne annulaire 600 comprend une pluralité d'encoches 675.

La couronne annulaire comprend au moins deux encoches 675, 675', réalisées sur au moins l'un des doigts 67. Tel qu'illustrée sur la FIGURE 21, chaque encoche 675, 675' débouche radialement sur l'intérieur. Les deux encoches 675, 675' sont réalisées au droit du flasque 25, notamment depuis le flanc 670, en particulier sur un même doigt 67.

La profondeur de chaque encoche 675, 675' s'étend radialement sur 1/3 de l'épaisseur Ep2 de la couronne annulaire, en particulier celle dudit doigt 67.

De préférence, les encoches 675, 675' sont décalés axialement l'une de l'autre :
- L'une des encoches 675 est réalisée aux abords du bord additionnel incurvé ;
- L'autre encoche 675' est réalisée aux abords du fond 210 du deuxième élément rotatif 2.

On a décrit sur la [Fig. 22], un neuvième mode de réalisation de l'invention, sensiblement similaire au premier mode de réalisation, à l'exception du fait que la couronne annulaire 600 comprend au moins un perçage central 676.

La couronne annulaire comprend au moins un perçage central 676, réalisé sur au moins l'un des doigts 67. Un doigt 67 peut comprendre uniquement un seul perçage. Tel qu'illustrée sur la FIGURE 22, le perçage central 676 débouche radialement sur l'extérieur.

A titre d'exemple, une pluralité de doigts 67 peuvent comprendre chacun un perçage central 676. Le perçage central 676 est réalisé radialement depuis l'extérieur, notamment au droit du flasque 25.

La profondeur de chaque perçage central 676 s'étend radialement sur 1/3 de l'épaisseur Ep2 de la couronne annulaire, en particulier celle dudit doigt 67.

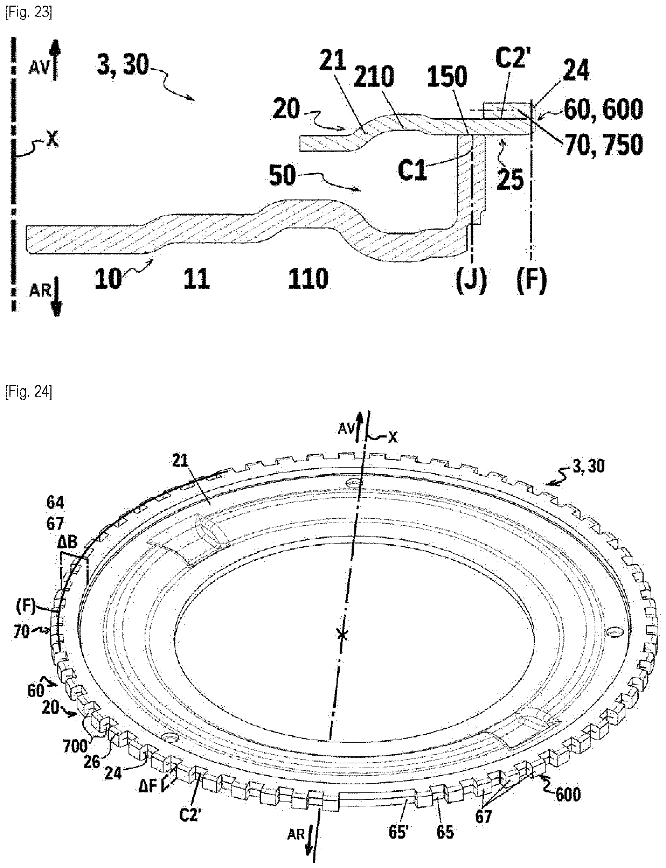

On a décrit sur les FIGURES.23-36, des exemples d'un dixième mode de réalisation sensiblement similaire au premier mode, à l'exception du fait que le bord additionnel 70 incurvé est replié sous forme de repli(s) de matière 750, ce qui arrête le mouvement radial des dents de la couronne annulaire 600. Ce repli de matière 750 peut être usinée pour présenter une zone plate (dite zone L), car le capteur doit être positionné à proximité de cette zone L.

Un repli de matière 750 peut s'étendre radialement en deçà de la jupe cylindrique ou être contenu au-delà de la jupe cylindrique. Si l'épaisseur de la tôle du flasque est inférieure ou égale à 4mm, alors l'épaisseur de la région L du bord additionnel incurvé ne peut être qu'inférieur ou égale à 8mm, pour une lecture optimisée du capteur.

Ces repli(s) de matière du deuxième élément rotatif sont ici configuré pour coopérer avec le deuxième élément rotatif lui-même, en particulier sur une autre partie du flasque, lors d'impacts sur le flasque 25. Le bord additionnel 70 incurvé peut venir au contact d'une autre partie localisée du deuxième élément rotatif, pour limiter la flexion de la cible du flasque. Cette mise en contact du bord additionnel 70 incurvé sur une autre partie du flasque peut s'exercer de manière ponctuelle ou permanente. Cette mise en contact définit un appui secondaire C2'.

Ainsi, la mise en contact, même ponctuel, du bord additionnel 70 incurvé sur l'appui secondaire C2' du deuxième élément rotatif amortit en majeur partie les impacts. Cet appui secondaire' C2 est formé au moins en partie le long du deuxième élément rotatif, en particulier, de manière partiellement sur une portion radiale 210 du deuxième élément rotatif. De préférence, l'appui secondaire C2' est circonférentiellement continue, notamment sur 360 degrés.

Dans les exemples illustrés aux FIGURES 23-36, l'appui secondaire C2' est disposé radialement en regard du bord additionnel 70 incurvé. L'appui secondaire C2' est formé sur une face opposée au fond 210. La couronne annulaire 600 peut entourer l'appui secondaire C2'. L'appui secondaire C2' est disposé radialement en deçà de la couronne annulaire 600. Par ailleurs, l'appui secondaire C2' est distant de la couronne annulaire 600, de manière à ne pas impacter cette dernière. Notamment, l'appui secondaire C2' est décalé axialement de la couronne annulaire 600.

Ce repli de matière peut délimiter en outre une série de doigts 67, espacés et répartis angulairement autour de l'axe X, autrement dit la couronne annulaire 600 de la cible 60, pour sur-épaissir les doigts 67 contre les impacts.

Cette série de doigts 67 est distincte des autres modes en ce qu'elle délimite une pluralité de fenêtres 65, 65' présentent deux contours de type ouvert, axialement opposés, tel qu'illustré à titre d'exemple sur la [Fig. 24].

L'exemple des FIGURES 23-24 illustre un bord additionnel 70 incurvé formé d'un seul repli de matière d'extension radiale, repliée vers l'intérieur du flasque et de la couronne annulaire, de manière parallèle à l'axe X.

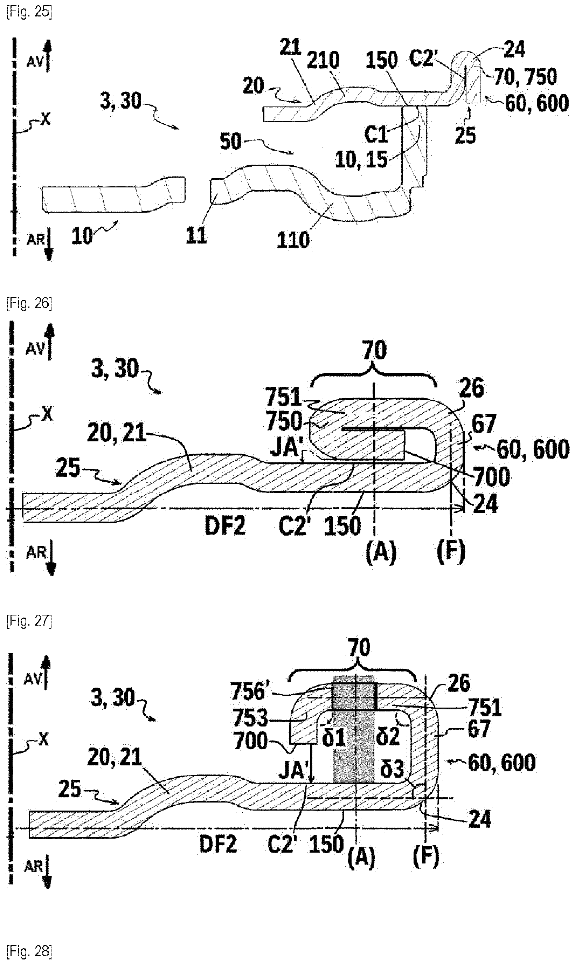

La [Fig. 25] illustre en variante un bord additionnel 70 incurvé formé d'un seul repli de matière d'extension radiale, repliée vers l'extérieur du flasque et de la couronne annulaire, notamment de manière perpendiculaire à l'axe X.

En outre, chaque repli de matière des FIGURES 23-25 est mis à plat le long du deuxième élément rotatif, en particulier sur la portion radiale 21. Aucun espace libre n'est alors ménagé.

La FIGURE 26 illustre en variante un bord additionnel 70 incurvé formé de deux replis de matière 750 d'extensions radiales, empilés l'un sur l'autre, notamment l'un à l'intérieur de l'autre. La tranche 700 est logée à l'intérieur du repli de matière, pour la renforcer contre les impacts.

Les FIGURES 27 à 28 illustrent chacune en variante un bord additionnel 70 incurvé formé d'un repli de matière 750 d'extension radiale et espacé axialement de la portion radiale 21 du deuxième élément rotatif 20, selon un jeu fonctionnel axial JA'. En outre, l'extrémité libre du repli de matière est en forme de crochet 753, de préférence d'extension axiale.
Avantageusement, le crochet 753 peut s'étendre axialement en direction de la portion radiale 21, tel qu'illustré en [Fig. 27], ou bien dans la direction opposée à la portion radiale 21, tel qu'illustré en [Fig. 28].
Avantageusement, le crochet 753 peut être en appui axial sur la portion 21 ou bien espacé axialement de la portion radiale 21 du deuxième élément rotatif 20, selon l'appui secondaire C2'.

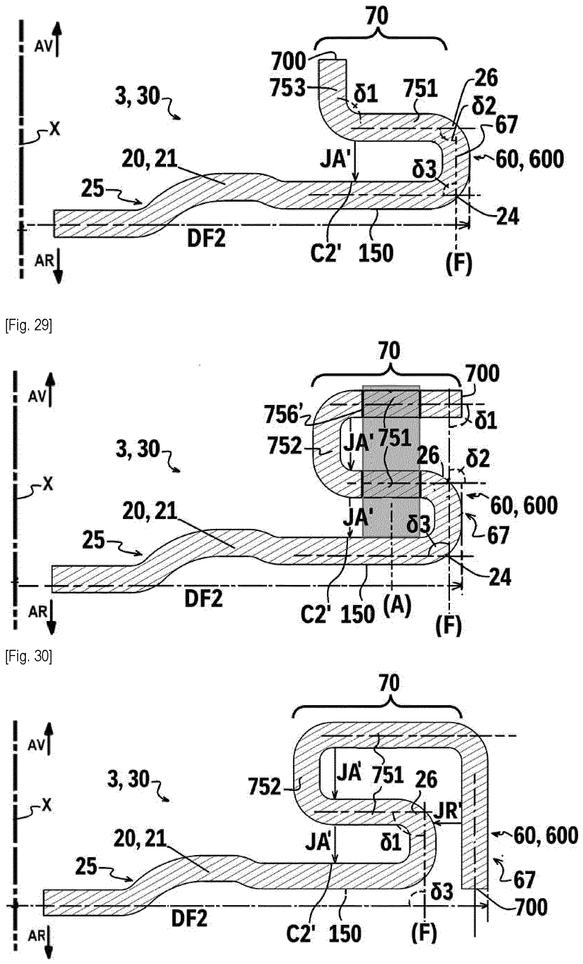

La FIGURE 29 illustre en variante un bord additionnel 70 incurvé formé de deux replis de matière 750 empilés axialement, espacés axialement les uns des autres et de la portion radiale 21 selon des jeux fonctionnels axiaux JA', ici identiques.

Avantageusement les FIGURES 27 et 29 illustrent un perçage central ou une série de perçages centraux 756, qui sont destinés au passage d'outil de montage pour assembler les premier et deuxième éléments rotatifs 10, 20.

Chaque perçage central 756 présente un axe A de montage parallèle à l'axe X, de préférence disposé en regard de l'appui primaire. Les perçages centraux 756 d'un même bord additionnel 70 incurvé, ici formés sur deux des replis de matière, sont alignés selon un même axe A de montage. Ainsi l'outil de montage peut passer au travers de plusieurs replis de matière avant d'atteindre la portion radiale 21.

La FIGURE 30 illustre en variante un bord additionnel 70 incurvé formé de trois replis de matière 750, dont :
- deux qui sont empilés et espacés axialement par rapport à la portion radiale 21 selon des jeux axiaux JA' ;
- un qui est espacé radialement par rapport à la portion radiale 21 selon un jeu fonctionnel radial JR' ;

Ces replis de matière des FIGURE 29-30 forment des coudes 751, 752 d'extension radiale ou axiale. Sur la FIGURE 30, la couronne annulaire 60 peut à l'inverse être ménagée en extrémité libre du bord additionnel 70 incurvé.

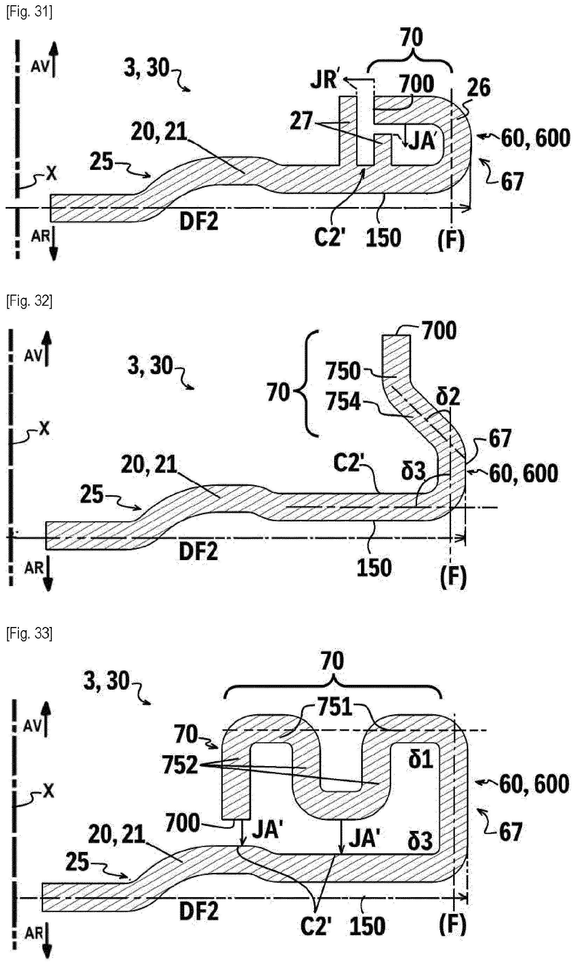

La FIGURE 31 illustre en variante deux épaulements 27 d'un deuxième élément rotatif 20. Chaque épaulement est formé depuis la portion radiale 21. Le bord additionnel 70 incurvé formé d'un repli de matière 750, qui est :
- espacé axialement par rapport à la portion radiale 21 selon un jeu fonctionnel axial JA' ;
- espacé axialement par rapport à la portion radiale 21 selon un jeu fonctionnel radial JR' ;
A titre d'exemple, le jeu fonctionnel JR' peut être de dimension supérieur au jeu fonctionnel JA'.

La FIGURE 32 illustre en variante un bord additionnel 70 incurvé formé d'au moins un repli de matière 750 de forme conique, formant ici en section un cône 754 de matière. On décale la couronne annulaire 600 de l'extrémité libre du bord additionnel 70 incurvé dans les directions axiale et radiale.

La FIGURE 33 illustre en variante un bord additionnel 70 incurvé formé de trois ou quatre replis de matière 750 empilés radialement, espacés radialement les uns des autres et de la portion radiale 21 selon des jeux radiaux JR'. Ces replis de matière, également réalisés en forme de coudes 751, 752 d'extension radiale ou axiale, définissent un motif répétitif, de préférence en forme de créneaux de matière.

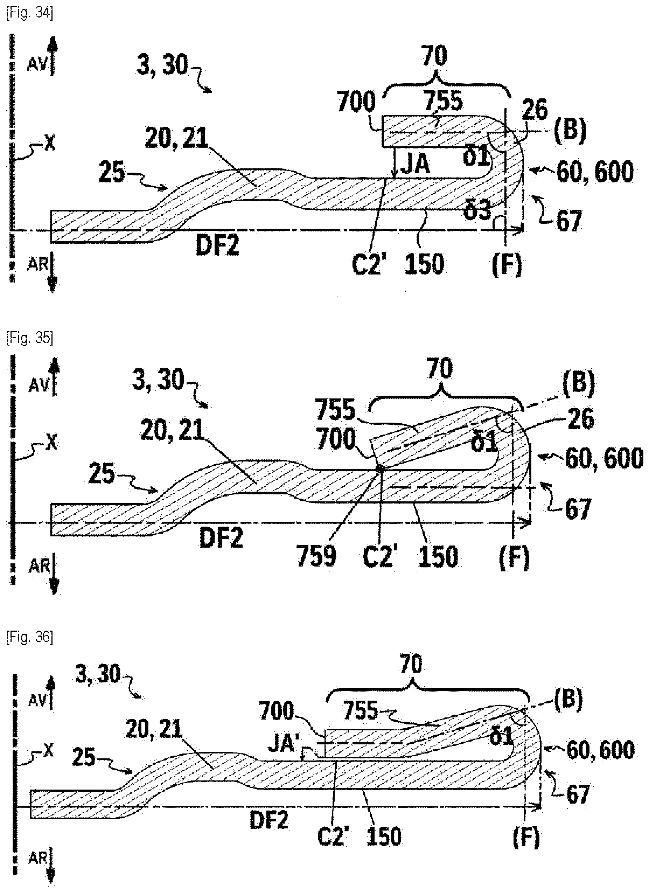

Les FIGURES 34, 35 et 36 illustrent chacune en variante un bord additionnel 70 incurvé formé d'un repli de matière 750 de forme courbée ou bouclée, formant ici en section une boucle 755 de matière.

Ce repli de matière 750 courbée ou bouclée, s'étend selon un plan B de cintrage parallèle ou incliné par rapport à l'axe X. Sur la FIGURE 34, la boucle 755 peut être de type ouverte en extrémité libre, ce qui simplifie sa fabrication. Le plan B de cintrage d'un tel repli de matière est ici perpendiculaire par rapport à l'axe X ;

Sur les FIGURES 35 à 36, la boucle 755 de matière peut être de type fermée en extrémité libre, c'est-à-dire en appui fixe sur la portion radiale 21, notamment fixée par soudure 759 avec apport de matière. Le plan B de cintrage d'un tel repli de matière est ici incliné d'un angle primaire δ1 par rapport à l'axe X, ici d'environ 30 degrés.

Sur la FIGURE 36, la boucle 755 de matière peut montée aplatie sur la portion radiale 21, autrement dit à plat le long du deuxième élément rotatif. Sans une soudure, il peut résulter un jeu fonctionnel axial JA' résiduel, non nul, entre l'extrémité libre de la boucle 755 de matière et le deuxième élément rotatif.

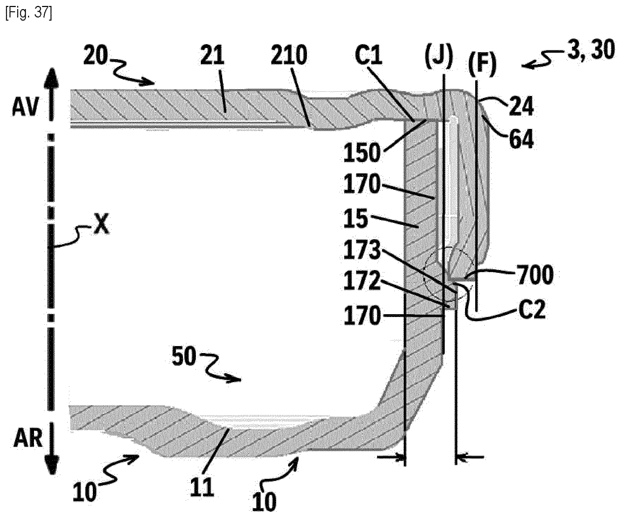

On a décrit sur la FIGURE 37, un dixième mode de réalisation sensiblement similaire au premier mode, à l'exception du fait que le bord additionnel 70 incurvé est formé par un emboutissage supplémentaire avant d'être ensuite emmanché en force dans la matière d'un épaulement 17 de la jupe cylindrique 15.

Y résulte une interférence de matière entre ces derniers. L'interférence peut être comprise entre 0,1 et 0,7 mm. On garantit ainsi que ce dernier soit en contact avec la jupe cylindrique 15 même à l'état libre.

Seul le bord additionnel 70 incurvé est au moins partiellement embouti et monté en force, par presse, dans un épaulement 17 de la jupe cylindrique. Le bord additionnel 70 incurvé est assemblé fixement à ladite jupe cylindrique 15.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. Les dimensions des figures ne sont pas à l'échelle réelle, elles ont pu être exagérées sur les figures suivantes, à des fins de compréhension de l'invention.

L'usage du verbe « comporter », « comprendre » ou « inclure » et de ses formes conjuguées n'exclut pas la présence d'autres éléments ou d'autres étapes que ceux énoncés dans une revendication. Dans les revendications, tout signe de référence entre parenthèses ne saurait être interprété comme une limitation de revendication.

## Revendications

1. Volant d'inertie (3) d'axe (X) de révolution, pour un système amortisseur, comprenant :
- un premier élément rotatif (10) destiné à être lié à un arbre menant, comprenant une jupe cylindrique (15),
- un deuxième élément rotatif (20) en contact sur un appui primaire (C1) de la jupe cylindrique (15), le deuxième élément rotatif comprenant un flasque (25) comprenant :
- une cible (60) formée d'une couronne annulaire (600) d'extension axiale, issue de matière avec le flasque (25) et destinée à être disposée en regard d'un capteur apte à délivrer un signal représentatif de la position angulaire et/ou de la vitesse de la cible,
- un bord additionnel (70) incurvé, issu de matière avec le flasque (25) et disposé au moins en partie entre la cible (60) et la jupe cylindrique (15), de manière à protéger la cible (60) contre les impacts.

2. Volant d'inertie (3) selon la revendication 1, dans lequel le bord additionnel (70) incurvé est configuré de telle manière à amortir les impacts contre la cible (60),
- soit par contact du bord additionnel (70) incurvé sur un appui secondaire (C2) de la jupe cylindrique,
- soit par contact du bord additionnel (70) incurvé sur un appui secondaire (C2') du deuxième élément rotatif (20), l'appui secondaire (C2, C2') étant distinct axialement de l'appui primaire (C1) de la jupe cylindrique (15),
de préférence l'appui secondaire (C2) de la jupe cylindrique (15) étant décalé axialement de la couronne annulaire (600) de la cible (60) ou l'appui secondaire (C2') du deuxième élément rotatif (20) étant contenu à l'intérieur de la couronne (600) de la cible (60).

3. Volant d'inertie (3) selon la revendication 1 ou 2, dans lequel le bord additionnel (70) incurvé est configuré de telle manière à être initialement :
- soit en appui axial sur l'appui secondaire (C2) de la jupe cylindrique (50) ;
- soit espacé de l'appui secondaire (C2) de la jupe cylindrique (15) :
- axialement par un jeu fonctionnel (JA) inférieur à une distance axiale susceptible d'entraîner une déformation plastique du bord additionnel (70) incurvé; et/ou
- radialement par un jeu fonctionnel (JR) inférieur à une distance radiale susceptible d'entraîner une déformation plastique du bord additionnel (70) incurvé,
- soit en appui axial ou radial sur l'appui secondaire (C2') du deuxième élément rotatif (20)
- soit espacé de l'appui secondaire (C2') du deuxième élément rotatif (20) :
- axialement par un jeu fonctionnel (JA') inférieur à une distance axiale susceptible d'entraîner une déformation plastique du bord additionnel (70) incurvé; et/ou
- radialement par un jeu fonctionnel (JR') inférieur à une distance radiale susceptible d'entraîner une déformation plastique du bord additionnel (70) incurvé.

4. Volant d'inertie (3) selon la revendication 2 ou 3, dans lequel au moins
- un épaulement (17) est réalisé depuis le diamètre extérieur de ladite jupe cylindrique (15), ou
- un épaulement (27) est réalisé depuis une portion radiale (210) du deuxième élément rotatif (20), l'épaulement (17, 27) formant au moins en partie l'appui secondaire (C2, C2') respectivement de ladite jupe cylindrique (15) ou du deuxième élément rotatif (20).
l'épaulement (17, 27) étant délimité par une nervure annulaire ou une rainure annulaire.

5. Volant d'inertie (3) selon l'une des revendications précédentes, dans lequel le bord additionnel (70) incurvé est embouti et emmanché en force par interférence dans la matière dudit épaulement (17, 27).

6. Volant d'inertie (3) selon l'une des revendications précédentes, dans lequel une portion radiale (210) du deuxième élément rotatif (20) forme un fond (210) reçu sur l'appui primaire (C1) du premier élément rotatif (10), l'appui primaire (C1) étant formé en bout de la jupe cylindrique (15).

7. Volant d'inertie (3) selon l'une des revendications précédentes, dans lequel le bord additionnel (70) incurvé forme avec le flasque (25) un angle (δ1) d'inclinaison du bord additionnel incurvé dit angle primaire, le flasque (25) formant avec la portion radiale (210) du deuxième élément rotatif (20) un angle (δ2, δ3) d'inclinaison du flasque qui est supérieur ou égal à l'angle (δ1) d'inclinaison du bord additionnel (70) incurvé.

8. Volant d'inertie (3) selon l'une des revendications précédentes, dans lequel
- le bord additionnel (70) incurvé est incliné par rapport à la couronne annulaire (600) de la cible, le bord additionnel (70) s'étendant radialement au droit de la jupe cylindrique (15) ; et/ou
- le bord additionnel (70) incurvé présente en section transversale une forme en L, ou en V, ou en U, ou en J, ou en C, ou en S ou en Z.

9. Volant d'inertie (3) selon l'une des revendications précédentes, dans lequel
- la couronne annulaire (600) de la cible comprend une pluralité de fenêtres (65, 65') ayant un contour fermé, réparties autour de l'axe X et séparées les unes des autres par des bras (67'), le bord additionnel (70) incurvé s'étendant de manière continue autour de l'axe X ; ou
- la couronne annulaire (600) de la cible comprend une pluralité de fenêtres (65, 65') ayant un ou deux contour(s) ouvert(s), réparties autour de l'axe X et séparées les unes des autres par des doigts (67), le bord additionnel (70) incurvé étant formé depuis l'extrémité des doigts (67).

10. Volant d'inertie (3) selon la revendication précédente, dans lequel
- au moins l'un des doigts (67) comprend un perçage central (676), réalisé sur la couronne annulaire (600) de la cible et aux abords du bord additionnel (70) incurvé, débouchant radialement vers l'extérieur, le perçage central étant notamment réalisé entre 1/3 et 2/3 de l'épaisseur (Ep2) dudit doigt (67) ; et/ou
- au moins l'un des doigts (67) comprend au moins une encoche (675), réalisée sur la couronne annulaire (600) de la cible et aux abords du bord additionnel (70) incurvé, ladite au moins une encoche (675) débouchant radialement vers l'intérieur, l'encoche étant notamment réalisée entre 1/3 et 2/3 de l'épaisseur (Ep2) dudit doigt (67).

11. Volant d'inertie (3) selon l'une des revendications précédentes, dans lequel le bord additionnel (70) incurvé comprend au moins un repli de matière (750), d'orientation axiale ou radiale, disposé au moins en partie à l'intérieur et/ou à l'extérieur de la couronne annulaire (600) de la cible, le repli de matière (750) s'étendant radialement en deçà de la jupe cylindrique ou étant contenu au-delà de la jupe cylindrique.

12. Volant d'inertie (3) selon la revendication précédente, dans lequel le bord additionnel (70) incurvé comprend un empilement axial ou radial de replis de matière (750), de préférence deux à trois replis de matière, qui sont de préférence espacés les uns des autres ou en appui les uns sur les autres.

13. Volant d'inertie (3) selon la revendication 11 ou 12, dans lequel un repli de matière (750) du bord additionnel incurvé est réalisé sous forme de coude (751, 752), de cône (754) ou de boucle (755) de matière de type ouverte ou fermé, l'extrémité libre dudit repli de matière formant par exemple un crochet (753) ou une courbure de matière, l'extrémité libre du repli de matière étant par exemple maintenu fixement au deuxième élément rotatif par soudure (759) en particulier avec apport de matière.

14. Volant d'inertie (3) selon l'une des revendications 11 à 13, dans lequel le bord additionnel (70) incurvé comprend au moins :
- un repli de matière (750) comprenant au moins un perçage central (756) d'axe (A) parallèle à l'axe (X), l'axe (A) étant de préférence disposé radialement en regard de la jupe cylindrique ; et/ou
- un repli de matière (750) qui est monté à plat le long du deuxième élément rotatif (20) ; et/ou
- un repli de matière (750) s'étendant selon un plan (B) de cintrage perpendiculaire ou incliné par rapport à l'axe (X).

15. Système (1) amortisseur pour chaine de transmission, destiné à être couplé par exemple à un moteur à combustion d'un engin de mobilité, et comprenant en outre :
- un volant d'inertie primaire (30) apte à coopérer avec un arbre mené,
- un volant d'inertie secondaire (40), apte à être entrainé en rotation par un arbre menant,
- des organes élastiques (55), couplant élastiquement en rotation lesdits volants d'inertie primaire et secondaire, et dans lequel le volant d'inertie primaire (30) ou le volant d'inertie secondaire (40) est un volant d'inertie (3) selon l'une quelconque des revendications précédentes.
